# EUROPEAN PATENT SPECIFICATION

(11) **EP 3 968 140 B1**
(45) Date of publication and mention of the grant of the patent: **03.09.2025**
(21) Application number: 21195094.4
(22) Date of filing: 06.09.2021
(51) Int. Cl.: G06F 3/12

(54) **INFORMATION PROCESSING SYSTEM, INFORMATION PROCESSING DEVICE, INFORMATION PROCESSING METHOD, RECORDING MEDIUM, PROGRAM, AND DEVICE**
INFORMATIONSVERARBEITUNGSSYSTEM, INFORMATIONSVERARBEITUNGSVORRICHTUNG, INFORMATIONSVERARBEITUNGSVERFAHREN, AUFZEICHNUNGSMEDIUM, PROGRAMM UND VORRICHTUNG
SYSTÈME DE TRAITEMENT D'INFORMATIONS, DISPOSITIF DE TRAITEMENT D'INFORMATIONS, PROCÉDÉ DE TRAITEMENT D'INFORMATIONS, SUPPORT D'ENREGISTREMENT, PROGRAMME ET DISPOSITIF

(30) Priority: 09.09.2020 JP 2020151587
(43) Date of publication of application: 16.03.2022
(73) Proprietor: Ricoh Company, Ltd., Tokyo 143-8555 (JP)
(72) Inventor: Shiraishi, Nozomi, Tokyo 143-8555 (JP)
(74) Representative: Marks & Clerk LLP

(56) References cited:
- US-A1- 2018 088 875
- US-B2- 6 954 737

## Description

### BACKGROUND OF THE INVENTION

### 1. Field of the Invention

The disclosures discussed herein relate to an information processing system, an information processing device, an information processing method, a non-transitory computer-readable recording medium, a program, and a device.

Devices such as image forming devices are designed to print images with coloring materials by mechanical operations such as a motor or clutch, which may require various types of maintenance such as cleaning and replacement of parts. For example, in the case of large-scale image forming devices (such as commercial printers), various maintenance tasks are performed. Some maintenance work is performed manually by a user with respect to the image forming devices, and some maintenance work is performed by an administrator by changing setting values of image forming devices from terminal devices.

A mechanism for an administrator to operate a web browser displayed by a PC (Personal Computer) has been devised in order to perform various settings to image forming devices (see, for example, Patent Document 1). According to such a mechanism, the administrator can change the settings without directly operating the image forming devices.

However, with such a related art mechanism, a user cannot start maintenance from a schedule of tasks related to the maintenance of devices. For example, when an administrator displays a setting screen on the PC for maintenance settings, it is workload for the administrator to check which of multiple setting screens should be opened and operated for each maintenance. In addition, when the administrator performs various maintenance, it is also necessary to manage the work of which maintenance is to be performed and when.

In view of improving the related art mechanism, the present invention is intended to provide an information processing system in which a user can start maintenance from a schedule of tasks related to device maintenance.

### [Related art document]

### [Patent Document]

[Patent Document 1] Japanese Unexamined Patent Application Publication No. 2001-225531
US 2018/0088875 A1 discloses a job management apparatus for managing a print job for a least one printer.

### SUMMARY OF THE INVENTION

The invention is defined by the appended independent claims 1, 14 and 15. The dependent claims describe advantageous aspects of the invention.

### [Effects of the Invention]

According to an embodiment of the present invention, an information processing system that enables a user to start maintenance from a schedule of tasks related to device maintenance can be provided.

### BRIEF DESCRIPTION OF THE DRAWINGS

Fig. 1 is a diagram illustrating an example of a task;
Fig. 2 is a diagram illustrating an example of a schedule of tasks displayed by an information processing system;
Fig. 3 is a diagram illustrating an example of a system configuration of an information processing system;
Fig. 4 is a diagram illustrating an example of a hardware configuration of the DFE;
Fig. 5 is a schematic diagram illustrating a schematic configuration of an image forming device;
Fig. 6 is a diagram illustrating functions related to task creation among the functions provided by the DFE;
Fig. 7 is a diagram illustrating schedule registration functions among the functions provided by the DFE;
Fig. 8 is a diagram illustrating functions related to task implementation functions among the functions provided by the DFE;
Figs. 9A to 9F are diagrams illustrating examples of information stored in a task component and schedule information storage unit;
Fig. 10 is a flowchart representing an example of a procedure or operation by which the DFE creates a task in response to an operation by an administrator;
Fig. 11 is a flowchart representing an example of a procedure or operation by which the DFE registers a task on a schedule, according to operations of an administrator;
Figs. 12A and 12B indicate a flowchart representing an example of a procedure or an operation in which the DFE causes an image forming device to perform a task according to an operation by a general user;
Fig. 13 is a diagram illustrating an example of a task creation screen;
Fig. 14 is a diagram illustrating an example of an SP item screen displayed in response to an SP item being clicked;
Fig. 15 is a diagram illustrating an example of a special item list screen displayed in response to a special item being clicked;
Fig. 16 is a diagram illustrating an example of a task list screen;
Fig. 17 is a diagram illustrating an example of a schedule screen;
Fig. 18 is a diagram illustrating an example of a task execution screen; and
Fig. 19 is a diagram illustrating an example of a task component related to a setting change.

### DETAILED DESCRIPTION OF THE PREFERRED EMBODIMENTS

Hereinafter, as an example of an embodiment of the present invention, an information processing method performed by an information processing system, and an information processing system will be described.

### <Outline>

According to the present embodiment, an administrator can register various maintenance tasks as "tasks" in a schedule. Tasks include maintenance of the setting change, and the administrator can register tasks for performing the setting change in the image forming device from a task schedule registering screen.

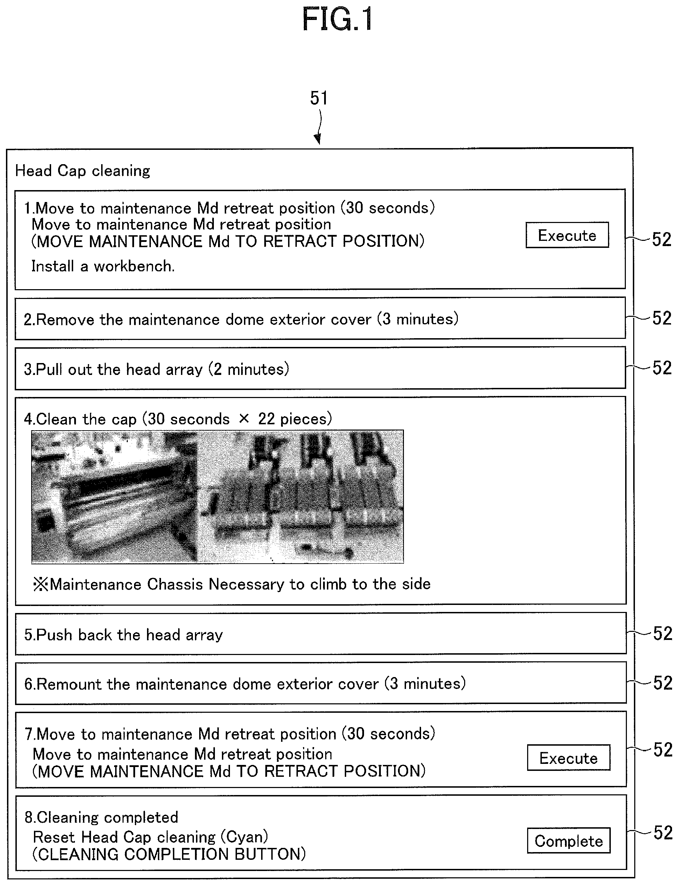

Fig. 1 illustrates an example of a task. As described above, according to this embodiment, tasks associated with various maintenance modules are registered in DFE (Digital Front End) described later by an administrator. Various maintenance operations are performed in an image forming device. The maintenance operation in Fig. 1 is "head cap cleaning". At a manageable grain scale, one maintenance task is treated as one task 51. Accordingly, one maintenance task manually performed by a user may be split into multiple tasks.

Further, the task 51 includes one or more task components 52. The task component 52 is a more detailed maintenance operation to accomplish the task. Then the task 51 "Head Cap Cleaning" includes the following task components 52.
1. Move to maintenance Md retreat position (30 seconds)
2. Remove the maintenance dome exterior cover (3 minutes)
3. Pull out the head array (2 minutes)
4. Clean the cap (30 seconds × 22 pieces)
5. Push back the head array
6. Remount the maintenance dome exterior cover (3 minutes)
7. Move to maintenance Md retreat position (30 seconds)
8. Cleaning completed
The number of task components included in a task is optional. An administrator registers the above-described task in a schedule.

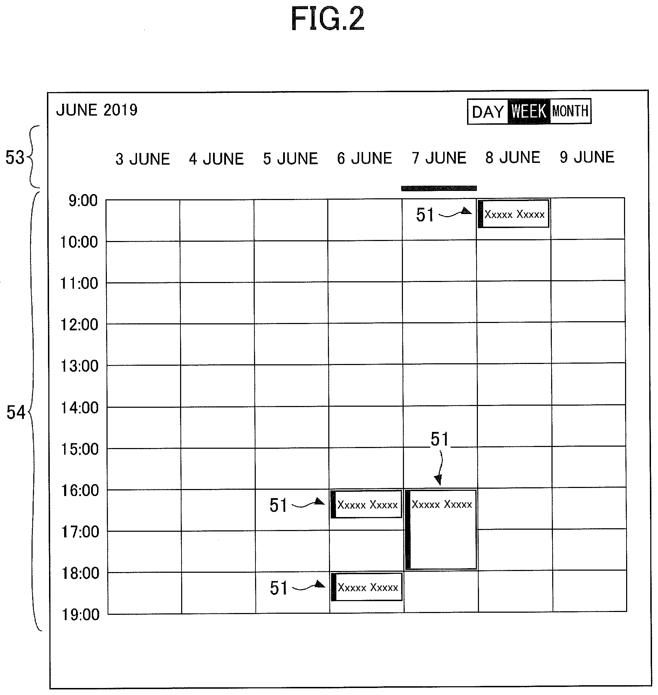

Fig. 2 is a diagram illustrating an example of a schedule of tasks displayed by the information processing system according to the present embodiment. In Fig. 2, a horizontal axis indicates date 53 and a vertical axis indicates time 54. An administrator can register a task 51 as illustrated in Fig. 1 in a schedule with specified date and start time.

In a case where an administrator executes registered tasks, the DFE displays the tasks to a terminal device based on the current time. For example, the DFE displays registered tasks according to a display format, such as month, week, and day. The display format in Fig. 2 is set on a weekly basis. A general user who executes tasks (an administrator may execute tasks) selects a task from the schedule and displays task components of the task. Since the task components each display a screen required for maintenance (including a screen required for setting change) associated with the task components, the general user does not have to select a screen to display the screen required for maintenance.

The administrator can register tasks in the schedule in this manner. The DFE also opens a necessary screen for a task registered at the current time, enabling the general user to proceed with maintenance without searching for a maintenance screen.

### <Terminology>

Maintenance indicates maintenance, management, and inspection of machinery and structures, or any work required for the maintenance and the like.

Tasks indicate missions or jobs. According to the present embodiment, various types of maintenance registered in the information processing device are referred to as tasks.

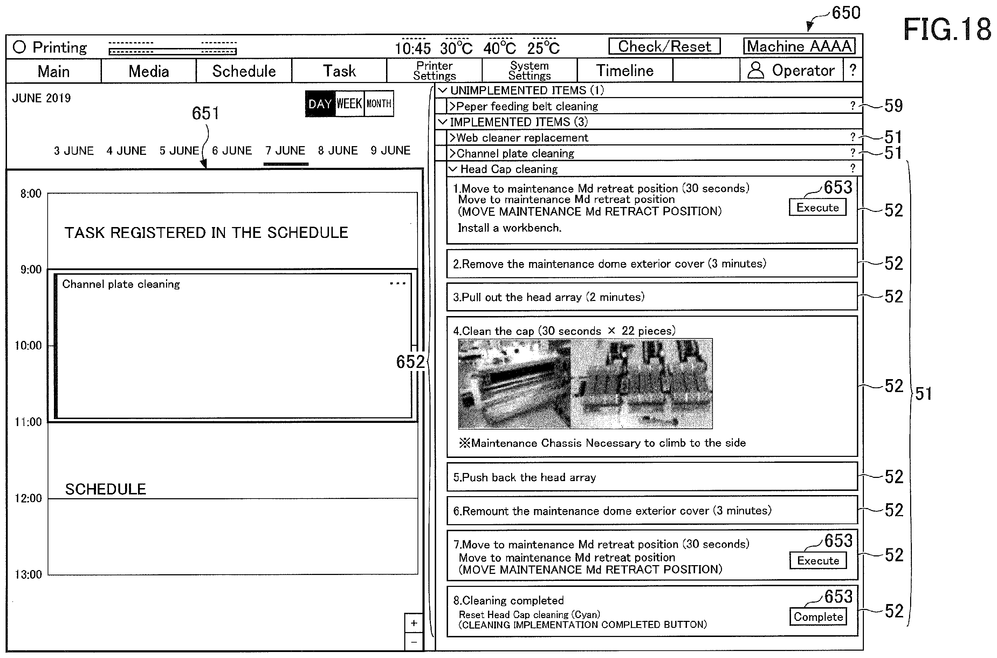

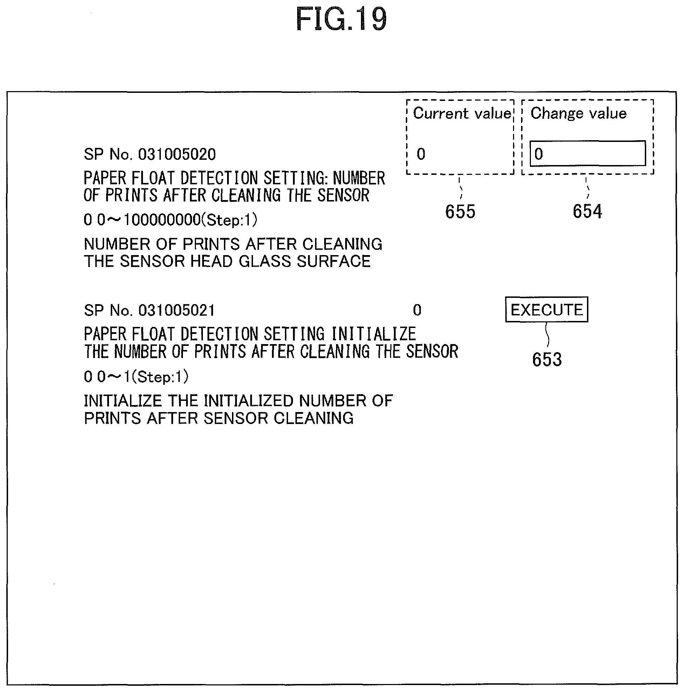

A screen relating to execution of a task may, for example, be any screen insofar as a screen enables a user to execute a task, such as the right side of a task execution screen depicted in Fig. 18 or a task component screen depicted in Fig. 19. Execution of a task means that a device performs processing according to the task.

Schedule information associated with a task execution screen means that a user can display a screen from which the user can execute a task from a schedule of the task. Schedules of tasks and screens from which the tasks can be executed may be displayed at the same time. For example, when a task is selected, a screen from which the task can be executed is displayed by the association with the task.

Task-related inputs are information or operations entered by a user when executing a task. The user enters, for example, a setting value or an operation to start executing a task. In addition, a user may enter an operation to enter that task-related work module has been completed or to enter a work module-related memo.

The information on maintenance may be information transmitted by the DFE to the image forming device for maintenance. For example, there are various setting values such as a setting value for improving image quality, a setting value for energy saving, or a setting value for communication setting. Further, a request for operating the image forming device (commands, signals, instructions, and the like) is also information related to maintenance.

When the processing involved is a setting value, the processing according to the maintenance information is to update the setting values, and when the processing involved is a request for an operation, the processing according to the maintenance information is to perform an operation.

### <Example of System Configuration>

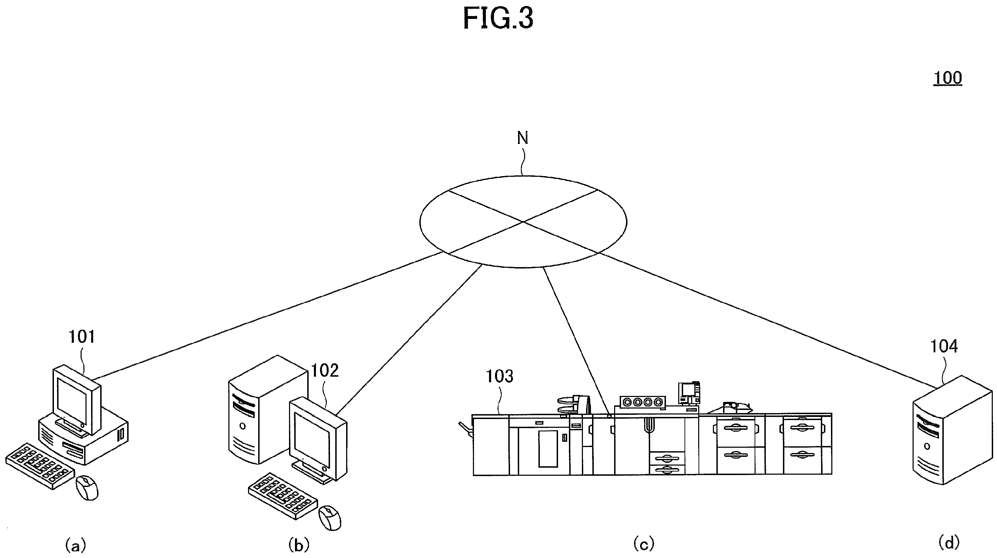

Fig. 3 is a diagram illustrating an example of a system configuration of an information processing system 100 according to the present embodiment. The information processing system 100 includes a terminal device 101, the DFE 102, and an image forming device 103. A server device 104 will be described later.

The terminal device 101 and the DFE 102 are capable of communicating with each other via a network N. The network includes, for example, a LAN in a facility where the image forming device 103 is located, and further includes the Internet where the DFE 102 is located on the Internet. The DFE 102 and the image forming device 103 may be connected on a one-to-one basis via a dedicated line or may be connected via a network. The DFE 102 and the image forming device 103 may be integrated or detached.

A web browser is operated in the terminal device 101. The web browser accesses a server provided by the DFE 102 and displays input operation screens for task creation, schedule registration, and task implementation. The terminal device 101 receives operations such as task creation, schedule registration, and task implementation for the input screen from an administrator and requests the DFE 102 to execute such operations.

The administrator enters the user ID and password into the terminal device 101 to log in to the DFE 102. Since the terminal device 101 transmits a user ID and password to the DFE 102, a general user or an administrator is identified in response to authentication by the DFE 102 being successful. Displays and items that can be entered differ according to the general user or administrator. An authentication server may authenticate the administrator.

When authentication is successful and the administrator logs in, access right to the task creation, schedule registration, and the task implementation are granted. In the case of general users, access to the task implementation is granted.

The terminal device 101 may be, for example, a PC (Personal Computer), a smartphone, a tablet terminal, a PDA (Personal Digital Assistant), a wearable PC (sunglasses, wristwatches, or the like). However, if the application software dedicated to the web browser or DFE 102 has a communication function, the application software may operate. For example, a car navigation system, a game machine, a television set, or the like may also be the terminal device 101.

When the web browser is running on the image forming device 103, the administrator can operate the image forming device to request the task creation, schedule registration, and task implementation of the DFE 102.

The DFE 102 also displays the input operation screen on the display of its own machine (i.e., the DFE 102) and receives the processing of task creation, schedule registration, and task implementation from the keyboard. In this case, the terminal device 101 is not required for the information processing system 100.

The DFE 102 is essentially a control device that receives a printing job performed by the image forming device 103, performs image processing (RIP: Raster Image Processor), manages executing progress, and monitors an abnormality. In this embodiment, the DFE 102 further receives the processing related to maintenance, and transmits a request for the processing related to maintenance to the image forming device 103. The DFE 102 receives the processing of task creation, schedule registration, and task implementation from the terminal device 101. That is, the DFE 102 provides the administrator with a user interface (input operation screen) that operates the image forming device 103. The DFE 102 includes one or more information processing devices.

The DFE 102 generates screen information for a screen displayed by a web browser. Screen information is a program described in HTML, XML, scripting language, and CSS (cascading style sheet). The structure of web pages is mainly specified by HTML, the scripting language defines the behavior of web pages, and CSS identifies the style of web pages. A web application is an application implemented by linking the screen information on the client side with applications and databases on the server side. According to the present embodiment, the terminal device 101 and the DFE 102 collaborate with each other to execute the web application.

The DFE 102 performs processing for registering a task or a task schedule in the database according to a request from the terminal device 101 or the image forming device 103, and also performs task implementation processing (changing the device setting, transmitting an operating request, and the like) for the image forming device.

The image forming device 103 executes a printing job in response to a request received from the DFE 102. According to the present embodiment, the image forming device 103 also receives maintenance and, for example, changes the device setting of the own machine (the image forming device 103) or executes the specified operation according to the task.

The image forming device 103 has a function to print an image on a sheet. A system for forming an image includes a laser printer or an ink jet printer. The image forming device 103 may have a function of a multifunction printer or MFP (Multi-function Peripheral/Product/Printer). The image forming device 103 may be called a printer, a printing device, or the like.

The image forming device 103 according to the present embodiment may be a so-called commercial printer. Commercial printers are not used internally by employees to print printed matter, but instead are used for commercial printing. Commercial printing outputs printed materials used in the business activities of ordinary companies and organizations. For example, flyers, pamphlets, posters, catalogs, company brochures, manuals, and the like, may be printed by commercial printers. The image forming device for the office use and the image forming device for commercial use mainly differ in printing speed, image quality, type and size of corresponding sheet, and the like.

The present embodiment can be applied to a device other than the image forming device 103. For example, the device may be a PJ (Projector), an electronic blackboard, a video conference terminal, a digital signage, a HUD (Head Up Display) device, an industrial machine, an imaging device, a sound collector, a medical device, a network home appliance, a game machine, a wearable PC or a desktop PC, and the like.

In the description of Fig. 3, the DFE 102 has been described as undertaking maintenance related processing (Web app). However, the processing relating to the maintenance may be performed by a server device 104, and for example, the independent server device 104 illustrated as (d) in Fig. 3 may perform the processing relating to the maintenance. In the case illustrated as (d) in Fig. 3, the server device 104 communicates with the image forming device 103 and performs a setting change or a specified operation according to the task.

Further, the image forming device 103 may perform the processing related to maintenance. In this case, the image forming device 103 has the function of the server device 104.

### <Hardware configuration>

### <<DFE>>

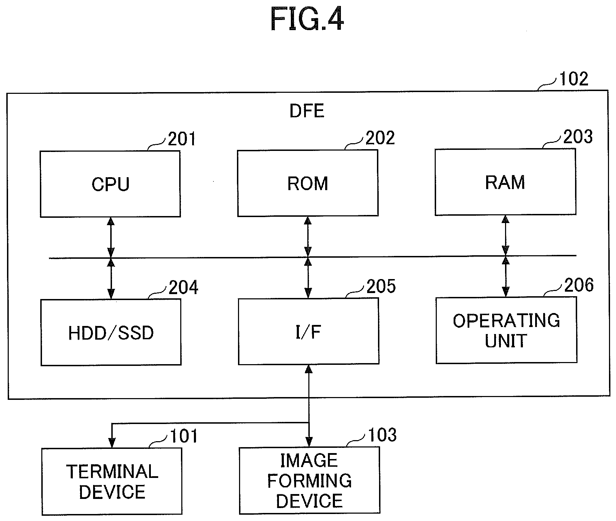

Fig. 4 is a diagram illustrating an example of a hardware configuration of the DFE 102. The DFE 102 has the same configuration as a computer. The DFE 102 includes a CPU 201, a ROM 202, a RAM 203, an HDD/SSD 204, an I/F 205, and an operation unit 206.

The CPU 201 uses the RAM 203 as a working area and executes a program stored in the ROM 202.

The HDD/SSD 204 is used as a storage unit and stores task and schedule information. The information stored in the HDD/SSD 204 may be used by the CPU 201 when the read program is executed.

The I/F 205 is an interface that enables communication with the image forming device 103 and the terminal 101.

The operation unit 206 has a touch panel and displays the status of the image forming device, the schedule of the task, the contents of the task, and the like on the screen. The operation unit 206 also receives inputs from users (administrators and general users) who execute tasks and administrators who create tasks and register schedules.

### <<Image Forming Device>>

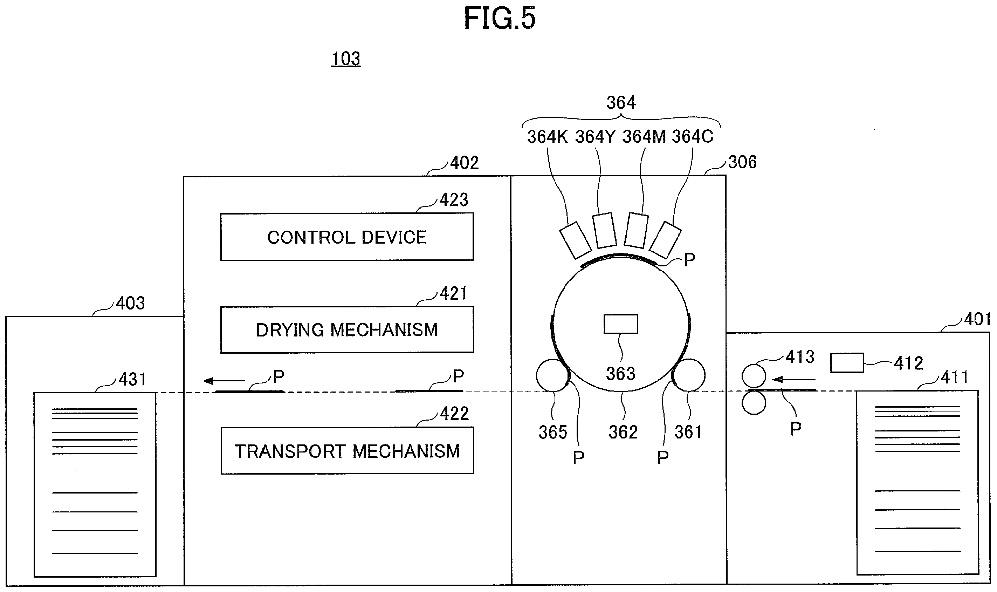

Fig. 5 is a schematic diagram illustrating a schematic configuration of the image forming device 103 according to the present embodiment. The image forming device 103 is, for example, an ink-jet type image forming device, and includes a sheet feeder 401, an image forming unit 306, a dryer 402, a sheet discharger 403, and a control device 423. In the image forming device 103, the image forming unit 306 forms an image with ink, which is a liquid for image forming, on sheet P that is a recording material serving as a sheet material fed from the sheet feeder 401. Then, the ink on the sheet is dried in the dryer 402, and the sheet is discharged from the sheet discharger 403.

The sheet feeder 401 mainly includes a sheet feed tray 411 on which a plurality of sheets P are stacked, a feed device 412 on which sheets are fed from the sheet feed tray 411 one by one, and a pair of registration rollers 413 via which sheets are fed to the image forming unit 306. The sheet feeder 412 may be any feeding device with a roller or a roller unit, or any feeding device with an air suction device. The sheet fed from the sheet feed tray 411 by the feed device 412 is fed to the image forming unit 306 by driving the pair of registration rollers 413 at a predetermined timing after the front end of the sheet reaches the pair of registration rollers 413. According to the present embodiment, the configuration of the sheet feeder 401 is unlimited when the sheet P is fed to the image forming unit 306.

The image forming unit 306 mainly includes a receiving cylinder 361 for receiving the fed sheet P, a sheet-carrying drum 362 for carrying the sheet P on an outer peripheral surface of the sheet-carrying drum 362, an ink ejecting unit 364 for ejecting ink toward the sheet P carried by the sheet-carrying drum 362, and a receiving cylinder 365 for delivering the sheet P conveyed by the sheet-carrying drum 362 to the dryer 402. The front end of the sheet P conveyed from the sheet feeder 401 to the image forming unit 306 is gripped by a sheet gripper provided on the surface of the receiving cylinder 361, and is conveyed as the surface of the receiving cylinder 361 moves. The sheet conveyed by the receiving cylinder 361 is passed to the sheet-carrying drum 362 at a position facing the sheet-carrying drum 362.

A sheet gripper is also provided on the surface of the sheet-carrying drum 362, and the front end of the sheet is gripped by the sheet gripper. A plurality of suction holes is formed on the surface of the sheet-carrying drum 362, and suction air flow toward the inside of the sheet-carrying drum 362 is generated in each suction hole by a suction device 363. The front end of the sheet P passed from the receiving cylinder 361 to the sheet-carrying drum 362 is gripped by the sheet gripper while the sheet P sucked onto the surface of the sheet-carrying drum 362 by the suction air flow is conveyed as the sheet-carrying drum 362 moves.

The ink ejecting unit 364 according to the present embodiment forms an image by ejecting ink of four colors, namely, C (cyan), M (magenta), Y (yellow), and K (black), and includes individual liquid ejection heads 364C, 364M, 364Y, and 364K for different inks. If the liquid ejecting heads 364C, 364M, 364Y, and 364K are for ejecting liquid, the configurations of the liquid ejecting heads 364C, 364M, 364Y, and 364K are not particularly limited, and any configurations may be employed. If desired, a liquid ejecting head for ejecting special ink, such as white, gold, or silver, or a liquid ejecting head for ejecting a liquid that does not constitute an image, such as a surface coating liquid, may be provided.

The liquid ejecting heads 364C, 364M, 364Y, and 364K of the ink ejecting unit 364 are respectively controlled to ejecting operation by driving signals corresponding to the image information. Respective color inks are discharged from the liquid ejecting heads 364C, 364M, 364Y, and 364K when the sheet P carried by the sheet-carrying drum 362 passes through the area facing the ink ejecting unit 364, and an image corresponding to the image information is formed. In this embodiment, the configuration of the image forming unit 306 is not particularly limited and may be any configuration insofar as the image is formed by attaching a liquid to the sheet P.

The dryer 402 mainly includes a drying mechanism 421 for drying ink adhered to the sheet P by the image forming unit 306 and a transport mechanism 422 for conveying the sheet P conveyed from the image forming unit 306. The sheet P conveyed from the image forming unit 306 is received by the transport mechanism 422, is conveyed to pass through the drying mechanism 421, and is fed to the sheet discharger 403. As the ink passes through the drying mechanism 421, the ink on the sheet P is dried, so that the moisture in the ink evaporates, the ink adheres to the sheet P, and curls of the sheet P are reduced.

The sheet discharger 403 mainly includes a discharge tray 431 on which a plurality of sheets P are stacked. The sheets P conveyed from the dryer 402 are sequentially stacked and retained on the discharge tray 431. According to the present embodiment, the configuration of the sheet discharger 403 is not particularly limited insofar as the sheet discharger 403 is configured to discharge the sheets P.

The control device 423 is an information processing device that controls the image forming device. For example, the control device 423 has a CPU, RAM, ROM, SSD (HDD), communication device, or the like. The control device 423 communicates with the DFE 102 to receive setting values and operating requests according to the task implementation.

### <Functionality>

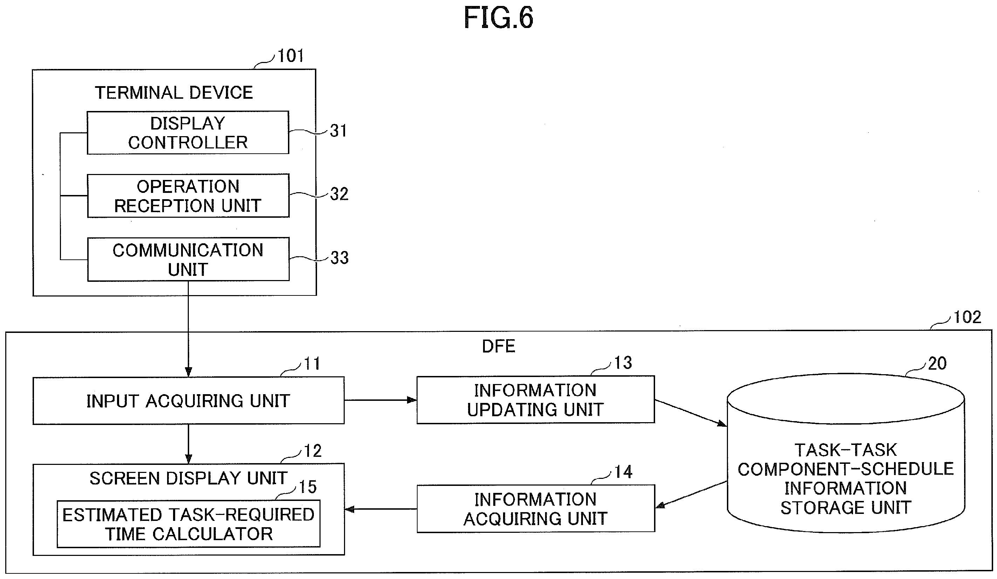

Fig. 6 illustrates functions related to task creation among the functions provided by the DFE 102. Each of the units illustrated in Fig. 6 is a web application function implemented by a server function in the DFE 102 in collaboration with a web browser of the terminal device 101. First, functions for general use regardless of task creation, schedule registration, and task implementation are described. Further, it is assumed that the web browser is operating in the terminal device 101. The processing of the DFE 102 may be the same, whether the web browser runs on the DFE 102 or the administrator manipulates the DFE 102 directly.

As illustrated in Fig. 6, the DFE 102 includes an input acquiring unit 11, a screen display unit 12, an information updating unit 13, an information acquiring unit 14, and a task-task component-schedule information storage unit 20. These functions provided by the DFE 102 are functions or units implemented by the CPU 201 executing instructions included in one or more programs installed in the DFE 102.

For example, the input acquiring unit 11 acquires information input to a screen displayed by the web browser of the terminal device 101 from the terminal device 101.

The screen display unit 12 generates screen information according to the operation acquired by the input acquiring unit 11. The screen display unit 12 is implemented by the HTML included in the screen information, the JavaScript (registered trademark), and a server program of the DFE 102 side, and updates the screen display according to input to the web browser.

The information updating unit 13 stores an input result to the web browser and the processing result in the task-task component-schedule information storage unit 20. The information acquiring unit 14 acquires requested target information input to the web browser from the task-task component-schedule information storage unit 20.

### <Task Creation Function>

Next, a task creation function according to the present embodiment will be described with reference to Fig. 6.

The input acquiring unit 11 acquires (receives) input information input to the terminal device 101 by the administrator. When the administrator is operating a web browser displayed by the DFE 102, the administrator acquires the input information input to the operation unit 206.

The task-task component-schedule information storage unit 20 stores:
- Task information (task name, task components and implementation order, estimated task-required time),
- Task component information (task component name, estimated task component implementation time),
- Schedule information (task to be implemented, scheduled task start time, scheduled task end time).
The task-task component-schedule information storage unit 20 further includes information associated the above-described information. Details will be described below.

The estimated task-required time calculator 15 of the screen display unit 12 calculates an estimated time required to execute a task by summing the estimated task component implementation times in task component information for the task components added to the task acquired by the input acquiring unit 11.

The information updating unit 13 updates the task information or the schedule information stored in the task-task component-schedule information storage unit 20.

The information acquiring unit 14 acquires the task information, the task component information, or the schedule information stored in the task-task component-schedule information storage unit 20 and outputs the obtained information to the screen display unit 12.

The screen display unit 12 updates the screen displayed by the terminal device 101 by generating screen information. For example, the estimated time required for task implementation is updated.

Next, functions of the terminal device 101 will be described. The terminal device 101 includes a display controller 31, an operation reception unit 32, and a communication unit 33. These functions of the terminal 101 are implemented by a web browser running JavaScript (trademark) included in the screen information and collaborating with the screen display unit 12 of the DFE 102.

The display controller 31 analyzes screen information and displays a task creation screen, a schedule screen, and a task execution screen to be described later on a display.

The operation reception unit 32 receives operations and inputs by an administrator or a general user for the task creation screen, the schedule screen, and the task execution screen.

The communication unit 33 mainly communicates with the DFE 102 and transmits information entered by an administrator to the DFE 102 on the task creation screen, the schedule screen, and the task execution screen.

When the administrator or a general user operates the DFE 102, the DFE 102 has a function of the terminal device 101. When the administrator or a general user operates the image forming device 103, the image forming device 103 has a function of the terminal device 101.

### <<Function Related to Schedule Registration>>

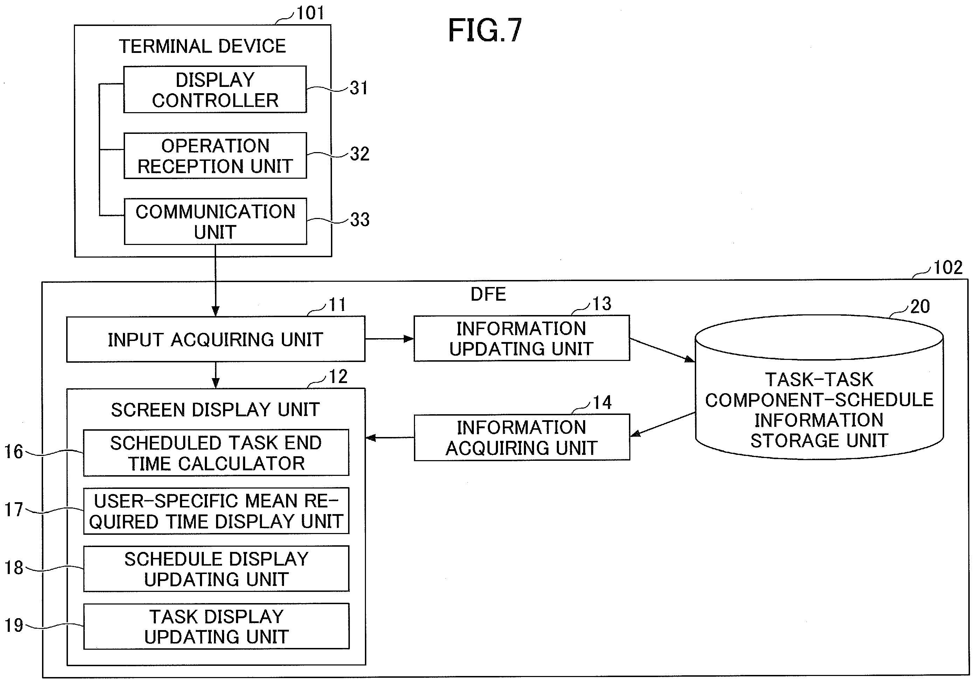

Next, functions related to the schedule registration function will be described with reference to Fig. 7. Fig. 7 is a functional block diagram illustrating a schedule registration from among the functions provided by the DFE 102. In the description of Fig. 7, the difference from Fig. 6 will be mainly described.

The screen display unit 12 of Fig. 7 includes a scheduled task end time calculator 16, a user-specific mean required time display unit 17, a schedule display updating unit 18, and a task display updating unit 19.

The scheduled task end time calculator 16 calculates a scheduled end time from the estimated task-required time of the task information and the scheduled start time of the schedule information.

The user-specific mean required time display unit 17 displays the mean time required of the task information on a per user basis. The mean time required of the task information is displayed on a per user basis when an administrator selects a user to perform the task.

The schedule display updating unit 18 determines the display format of the schedule according to the schedule display setting (day, week, month) and displays the task in the schedule. When the schedule is changed, the schedule display updating unit 18 updates the displayed schedule.

The task display updating unit 19 displays the task information. For example, a list of tasks and task components of tasks are displayed. When the task information is updated, the task display updating unit 19 updates the displayed tasks.

### <<Function Related to Task Implementation Function>>

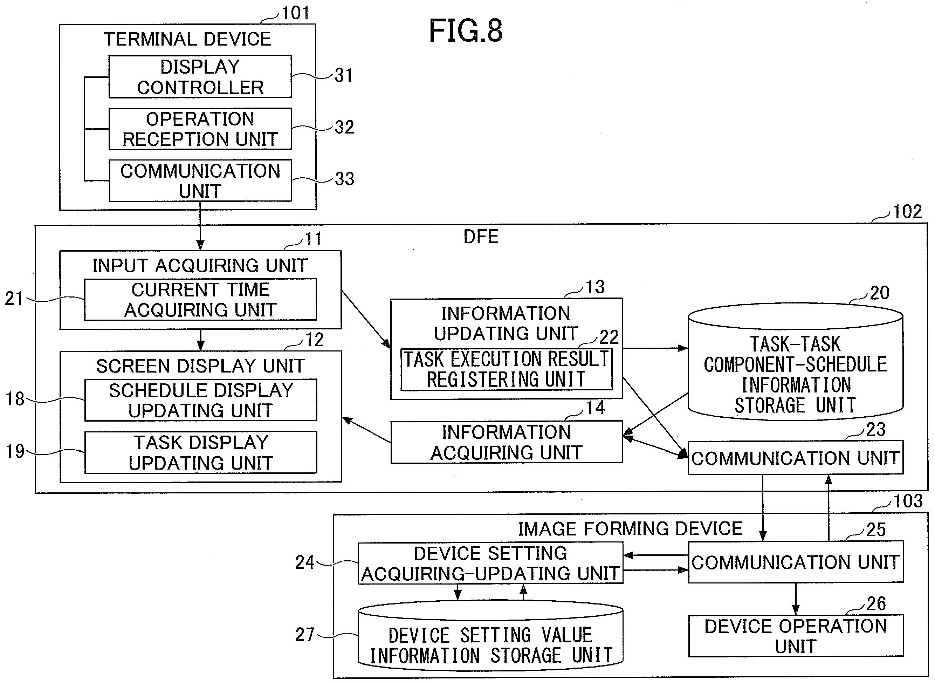

Next, functions related to the task implementation function will be described with reference to Fig. 8. Fig. 8 is a diagram illustrating functions related to a task implementation function from among the functions provided by the DFE 102. In the description of Fig. 8, the difference from Fig. 6 will be mainly described.

First, the input acquiring unit 11 includes a current time acquiring unit 21. The current time acquiring unit 21 acquires a current time from the RTC (Real Time Clock) or a time server.

The information updating unit 13 includes a task execution result registering unit 22. The task execution result registering unit 22 registers a task start time, a task end time, and a task implementation user (a user who has implemented a task) in the schedule information.

The screen display unit 12 includes a schedule display updating unit 18 and a task display updating unit 19. The schedule display updating unit 18 updates the schedule display according to the current time and the schedule display setting. The task display updating unit 19 updates the task display according to an implementation status of the task and the current time.

### <<Device Function>>

Next, functions of the image forming device 103 will be described. The image forming device 103 includes a device setting acquiring-updating unit 24, a communication unit 25, a device operation unit 26, and a device setting value information storage unit 27. These functions of the image forming device 103 are functions or unit implemented when an instruction included in one or more programs installed in the image forming device 103 is executed by the control device 423.

The communication unit 25 communicates with the communication unit 23 on the DFE 102 side. The communication unit 25 may be implemented, for example, as a communication interface communicating over TCP/IP, such as a network card, or as a communication program controlling communication over a USB cable.

The device setting value information storage unit 27 stores a setting value of the image forming device 103. The device setting acquiring-updating unit 24 acquires or updates the setting value of the image forming device 103 from the device setting value information storage unit 27. The setting values of the image forming device 103 may vary, and may include, for example, a setting value for adjusting the solenoid valve ON timing.

The device operation unit 26 performs an operation instructed by the DFE 102 on the image forming device 103 according to the task. The contents of the operation performed may vary, and may include, for example, printing to detect defective nozzles.

### <Information Stored in Task-Task Component-Schedule Information Storage Unit>

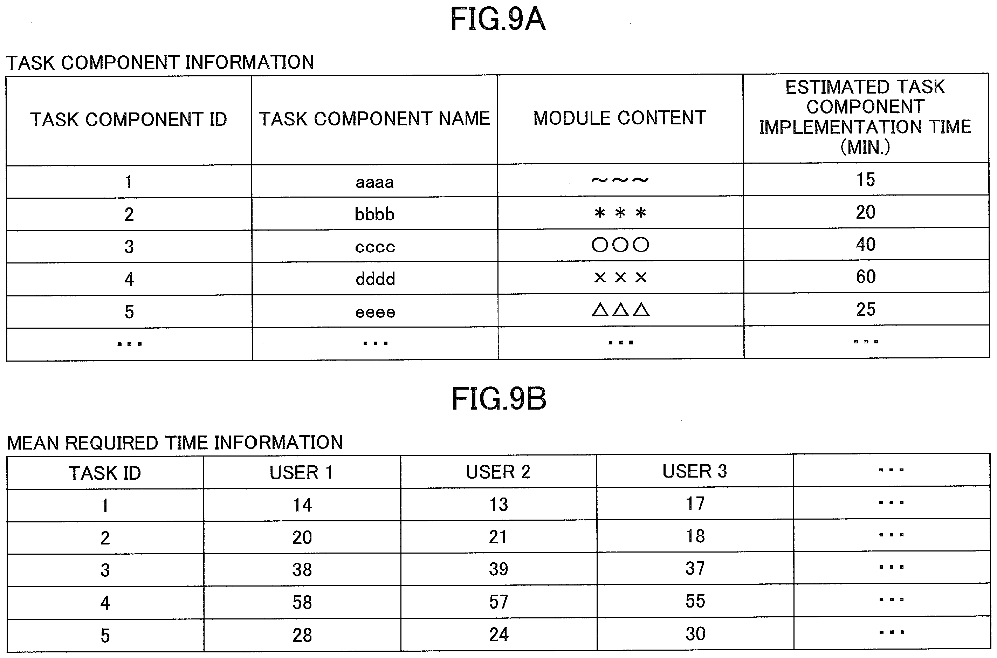

Referring to Figs. 9A to 9F, information stored in the task-task component-schedule information storage unit 20 will be described. Fig. 9A illustrates an example of task component information. The task component information includes the kind of information of a task component has. The task component information includes a task component ID in association with a task component name, module content of the task component, and estimated task component implementation time.
- Task component ID: Identification information of a task component, which is given in advance.
- Task component name: A name of a task component (easy for the administrator and a general user to understand), which is given in advance.
- Module content: A specific work content of a task component. The work content includes API (Application Interface) information for performing the operations and settings of the image forming device 103, and UI information such as buttons at the time of settings, which are given in advance.
- Estimated task component implementation time: An estimated time required to execute a task component, which is given in advance.

Note that ID stands for Identification, which means identifier or identification information. An ID is a name, code, character string, numeric value, or one or more of these combinations used to uniquely distinguish a particular object from multiple objects.

Fig. 9B illustrates an example of mean required time information. Mean required time information is the mean time required for each user to execute a task.
- Task ID: Identification information of a task. The task ID is numbered upon task creation.
- User ID: Mean time required for each task associated with identification information of a general user. The user ID includes a measured value. Tasks that have not been executed by the general user are left blank.

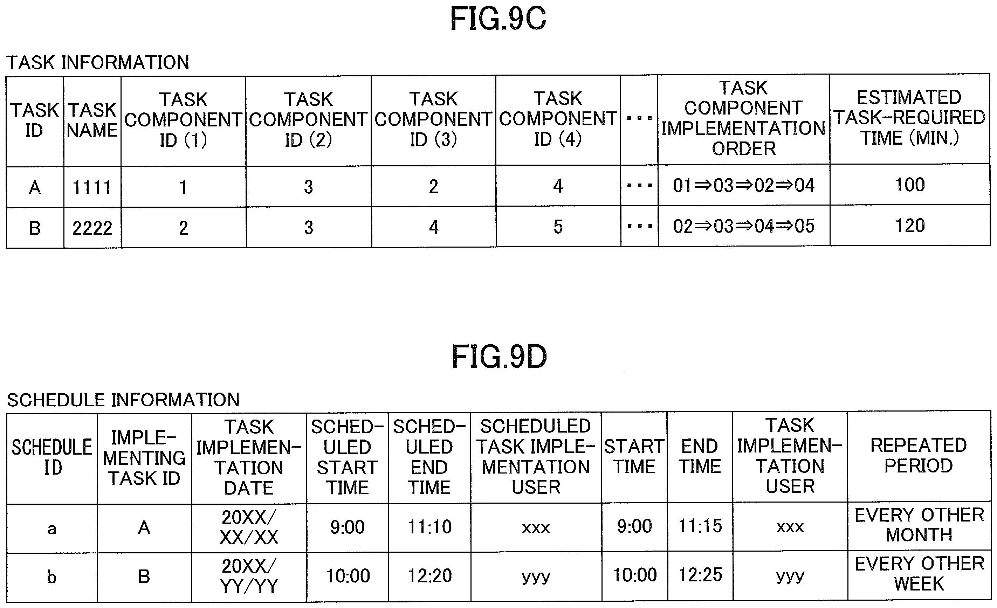

Fig. 9C illustrates an example of task information. Task information is a task component, and the like of each task. Task information corresponds to the task ID, task name, task component ID, task component implementation order, and estimated task-required time.
- Task ID: Identification information of a task.
- Task name: A name of a task, which is given by the administrator at his or her discretion.
- Task component ID: Identification information for each task component.
- Task component implementation order: The order in which task components of a task are implemented, which is set by the administrator.
- Estimated task-required time: The sum of the estimated task component implementation times required to implement task components on a per task component basis. The estimated task-required time is calculated by the estimated task-required time calculator 15.

Fig. 9D illustrates an example of schedule information. The schedule information has a task registered in the schedule. The schedule information includes a scheduled ID in association with a task to be implemented, a task implementation date, a scheduled start time, a scheduled end time, a scheduled task implementation user, a start time, an end time, a task implementation user, and a repeated period.
- Schedule ID: Identification information that identifies a schedule. One schedule corresponds to one task. The schedule ID is numbered upon schedule registration.
- Implementing Task ID: Identification information of a task to be implemented registered in the schedule.
- Task implementation date: The date on which a task is scheduled to be implemented.
- Scheduled start time: The time the task is scheduled to start, which is registered by the administrator.
- Scheduled end time: The time at which a task will be completed. Estimated end time = Scheduled start time + Estimated task-required time, or Scheduled end time = Scheduled start time + Mean required time per user.
- Scheduled task implementation user: A name of a user (or user ID) who is scheduled to perform a task, which is registered by the administrator.
- Start time: The time at which a task was actually started.
- End time: The time at which the task was actually completed.
- Task implementation user: A user name of a general user who actually performed a task. The user identified by the login is registered.
- Repeated period: How often a task is repeated. Some tasks are repeated multiple times, which is registered by the administrator.

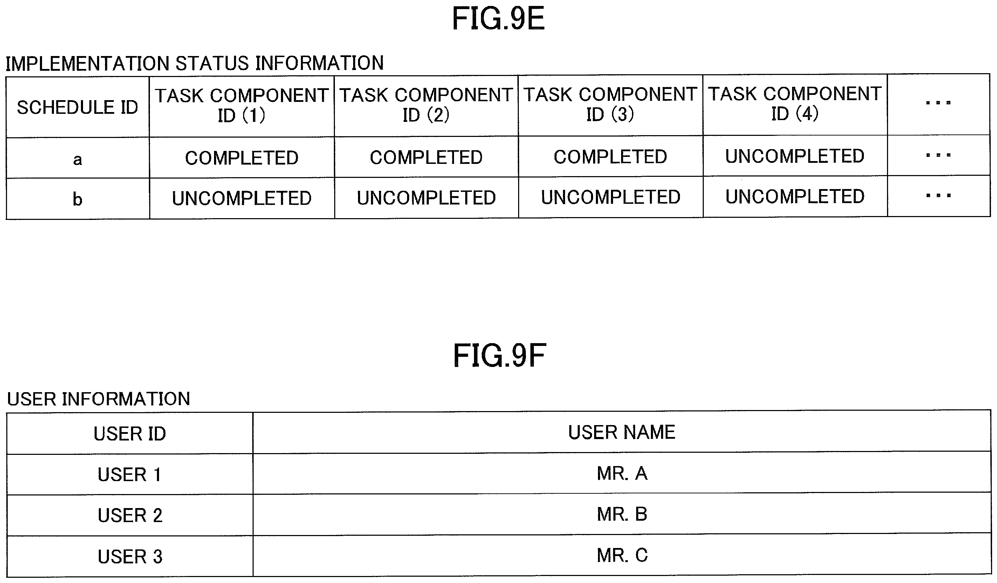

Fig. 9E illustrates an example of implementation status information. The implementation status of a task is recorded per task component in the implementation status information. The implementation status information includes a schedule ID in association with a task component ID of a task in the schedule information. That is, which of task components of the task has been executed so far is registered.
- Schedule ID: Identification information of a schedule.
- "Completed" or "uncompleted" in association with each task component ID. An initial value is "uncompleted", and when a completed button described later is pressed on the task execution screen, the "uncompleted" value becomes "completed".

Fig. 9F illustrates an example of user information. User information is information about a user. User information is associated with a user ID.
- User ID: Identification information of a user, which is registered in advance.
- User name: A name or the like of a user, which is registered in advance.

The password, affiliation, and the like may be registered in the user information.

### <Operation Procedure>

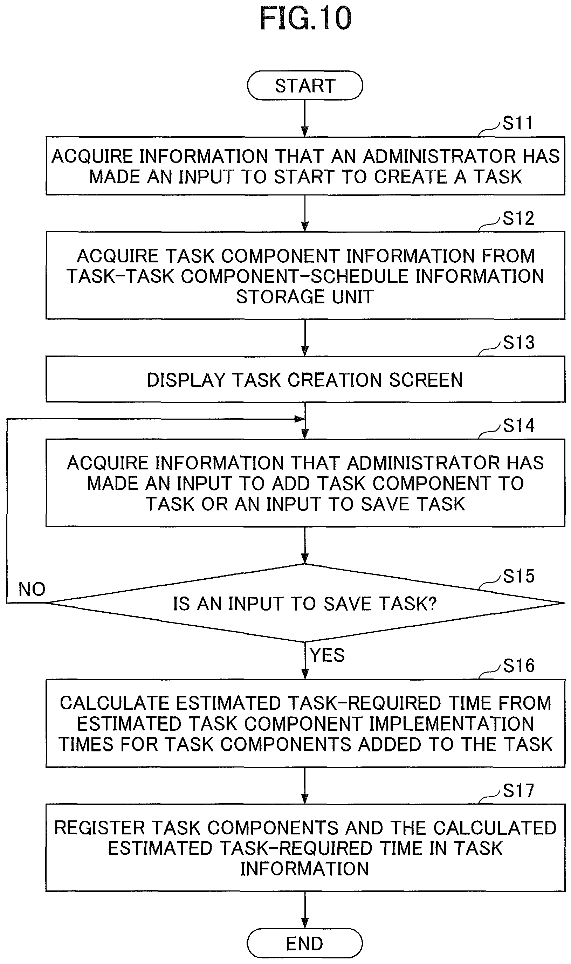

Next, a process or an operation flow performed by the information processing system 100 will be described with reference to Figs. 10 to 12.

First, the creation of a task will be described with reference to Fig. 10. Fig. 10 is a diagram illustrating an example of a flowchart representing a procedure or operation by which the DFE 102 creates a task according to an operation by an administrator. The terminal device 101 communicates with the DFE 102, the image forming device 103 communicates with the DFE 102, or an administrator directly operates the DFE 102.

The input acquiring unit 11 acquires information that an administrator has made an input to start to create a task (S11).

The information acquiring unit 14 acquires task component information from the task-task component-schedule information storage unit 20 (S12).

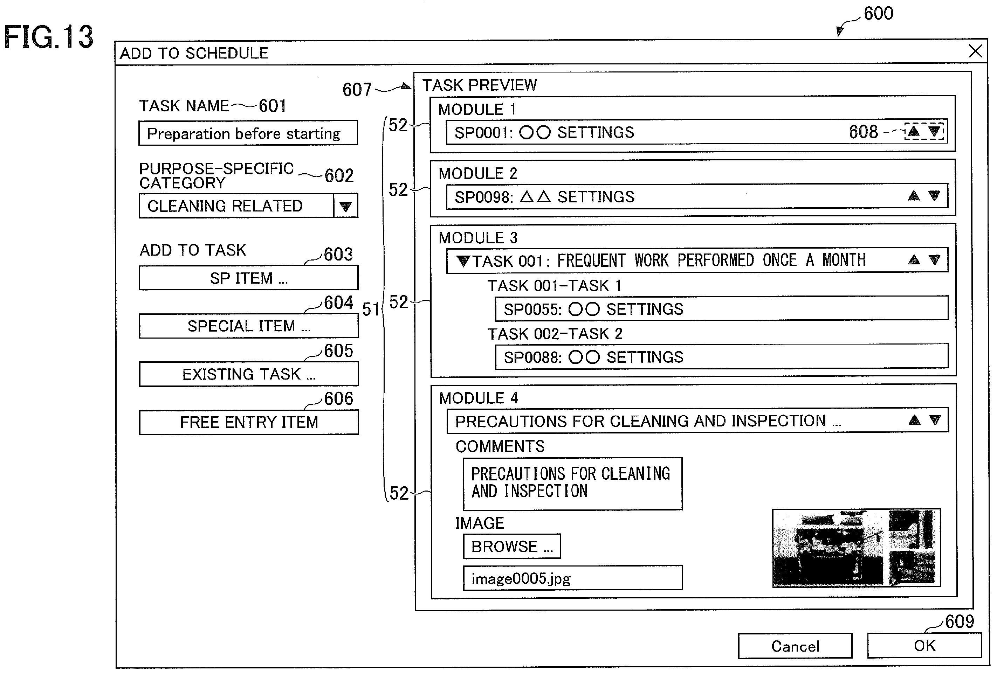

The screen display unit 12 uses the task component information to create the screen information of the task creation screen (S13). An example of the task creation screen is illustrated in Fig. 13.

Next, the input acquiring unit 11 acquires information that an administrator has made an input to add a task component to a task or an input to save a task (S14).

If the input is an input to add the task component to the task (No in S15), step S14 is executed repeatedly. If the input is an input to save the task (Yes in S15), the process proceeds to step S16.

The estimated task-required time calculator 15 calculates an estimated task-required time by summing estimated task component implementation times of the task components added to the task (S16).

The information updating unit 13 registers the task components and the calculated estimated task-required time in the task information (S17).

The administrator can register a task by combining task components in this manner.

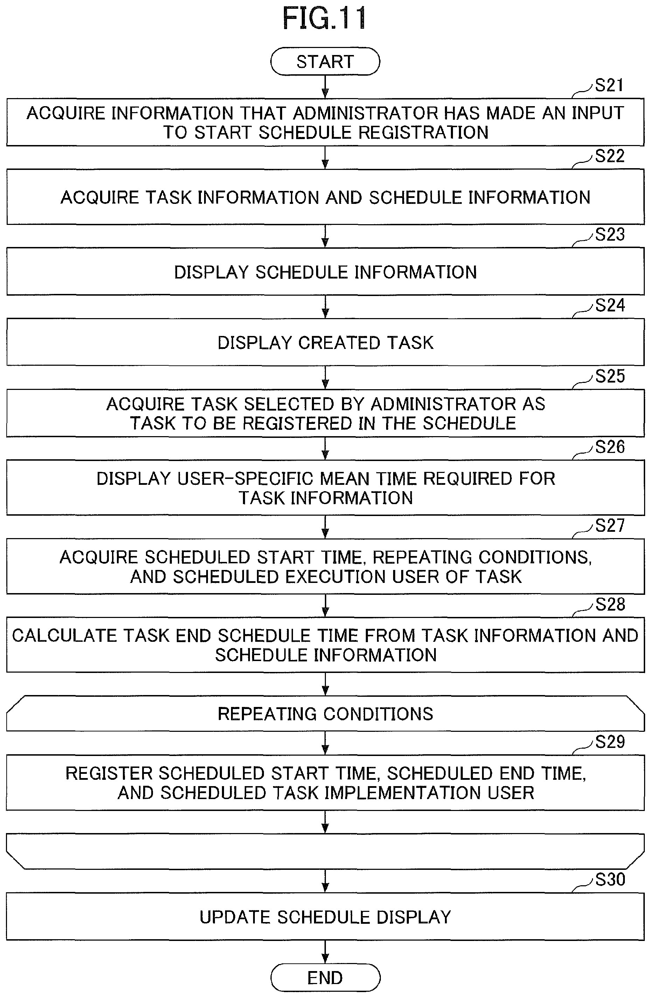

Next, the schedule registration will be described with reference to Fig. 11. Fig. 11 is a diagram illustrating an example of a flowchart representing a procedure or operation in which the DFE 102 registers a task in a schedule according to an operation of an administrator. The terminal device 101 communicates with the DFE 102, the image forming device 103 communicates with the DFE 102, or an administrator directly operates the DFE 102.

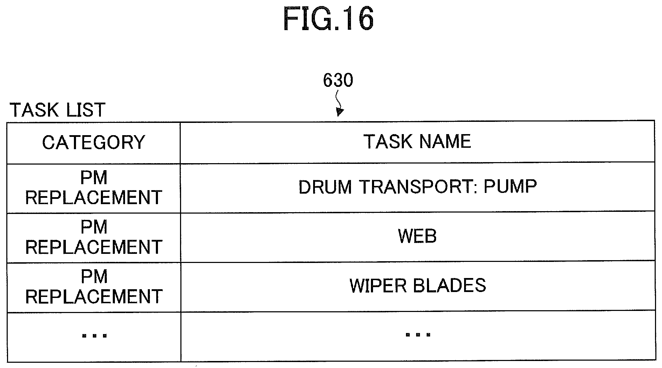

The input acquiring unit 11 acquires information that the administrator has entered the start of the schedule registration (S21). The input acquiring unit 11 receives the selection of a task from the task list of Fig. 16, which will be described later.

Accordingly, the information acquiring unit 14 acquires task information, schedule information, and mean required time information from the task-task component-schedule information storage unit 20 (S22).

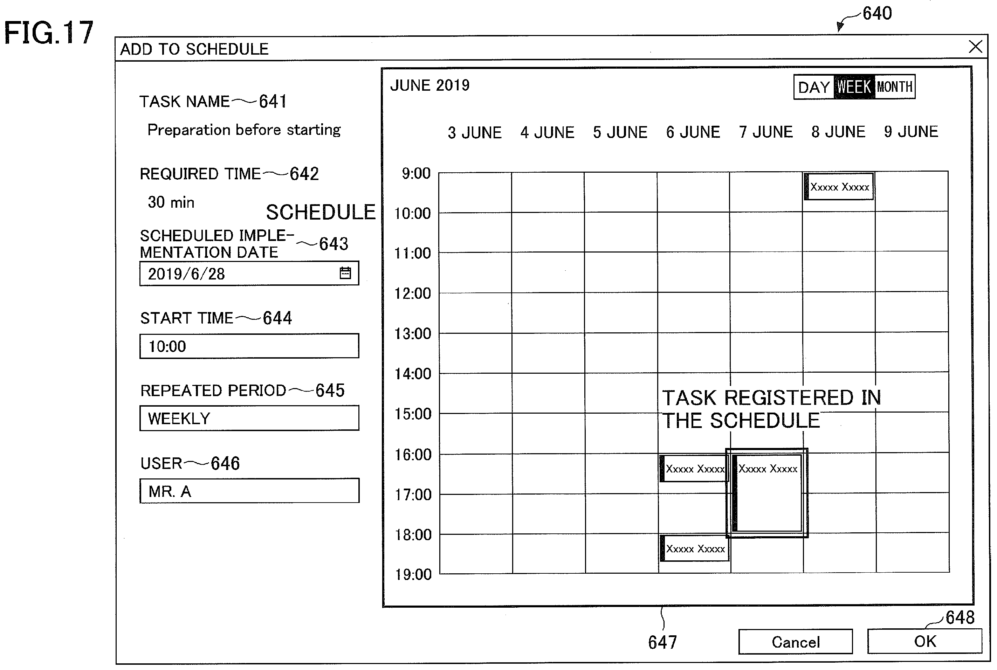

First, the schedule display updating unit 18 displays a time and date frame according to the display setting (day, week, month) (S23), and the task display updating unit 19 displays the created task in association with the time and date frame using the task information (S24). As a result, the task schedule is displayed. Fig. 17 illustrates an example of a schedule screen. If the display setting is "Day", the current day's implementing task is displayed, if the display setting is "Week", the implementing task in the week including today is displayed, and if the display setting is "Month", the implementing task in the month including today is displayed.

The input acquiring unit 11 acquires the task selected by the administrator as a task to be registered in the schedule (S25). For example, the acquired task is a task selected from the task list of Fig. 16.

Next, the user-specific mean required time display unit 17 displays a user-specific mean time required for the selected task using the mean required time information (S26). The user-specific mean required time display unit 17 displays the mean required time of the user ID corresponding to the task ID in association with the user name of the user information. This enables the administrator to select the appropriate scheduled implementation user.

The input acquiring unit 11 acquires the scheduled start time, the repeating condition, and the scheduled task implementation user input by the administrator from the terminal device 101 (S27).

The scheduled task end time calculator 16 adds the mean time required for the task of the scheduled implementation user to the task start schedule time to calculate the scheduled task end time (S28).

Step S29 is executed repeatedly according to the repeating condition.

The information updating unit 13 registers a scheduled start time, a scheduled end time, and a scheduled implementation user by the number of repetitions in the schedule information (S29). Duplicate schedules may be registered in the same time range. This is because multiple general users can perform different tasks in parallel in some cases. Alternatively, when duplicate schedules are registered in the same time range, the information updating unit 13 may display an error in order to request confirmation from the administrator.

The schedule display updating unit 18 updates the schedule display using the schedule information (S30).

The above-described process enables the administrator to register a task in the schedule information.

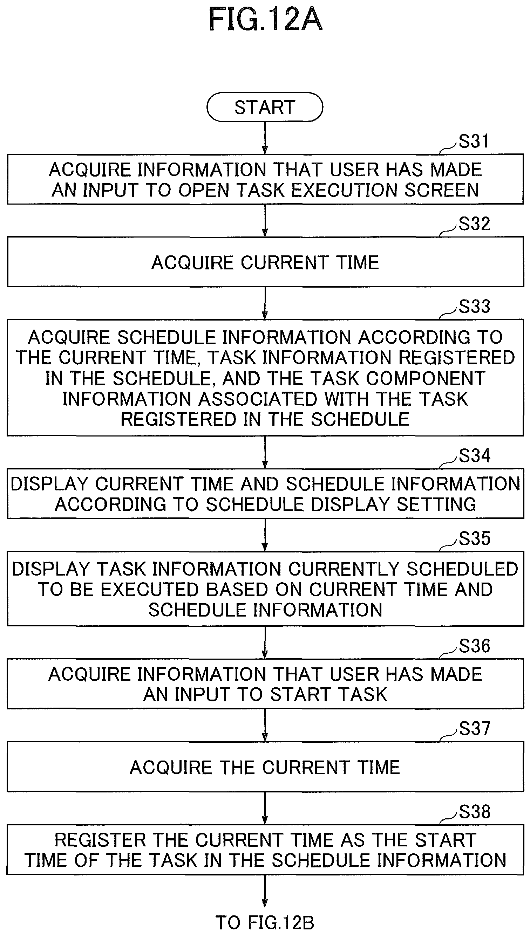

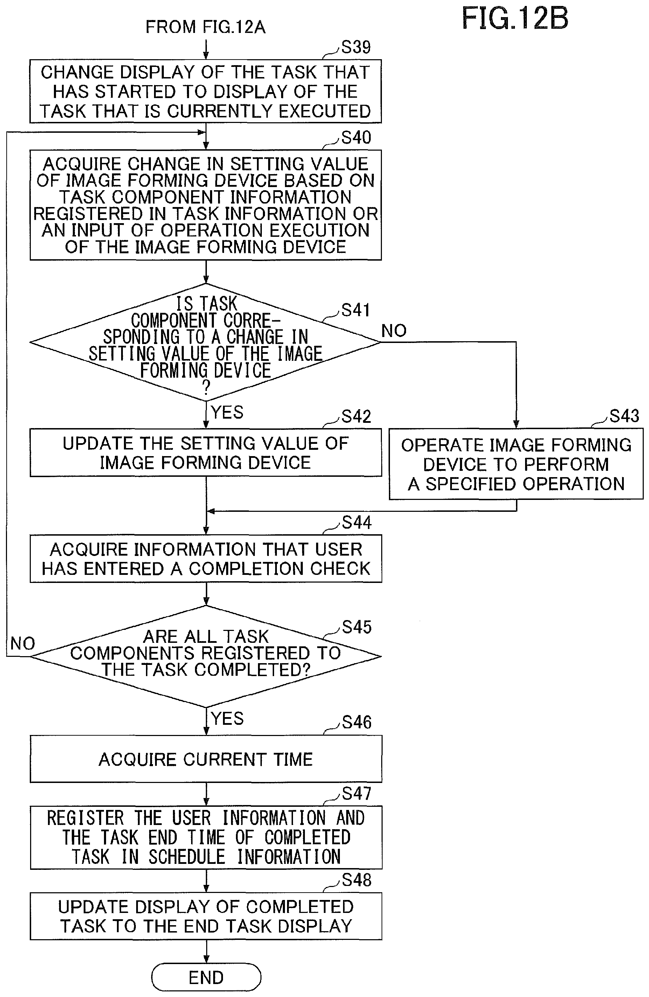

Next, task implementation will be described with reference to Figs. 12A and 12B. Figs. 12A and 12B illustrates a flowchart representing a procedure or an operation in which the DFE 102 causes the image forming device 103 to perform a task according to an operation by a general user.

The input acquiring unit 11 acquires an input indicating that the general user has opened the task execution screen (S31).

Accordingly, the current time acquiring unit 21 acquires the current time from the RTC or the time server (S32).

The information acquiring unit 14 acquires the schedule information according to the current time, the task information registered in the schedule, and the task component information associated with the task registered in the schedule from the task-task component-schedule information storage unit 20 (S33). The meaning of acquiring such information "according to the current time" indicates acquiring the information in a range of 1 day, 1 week, 1 month, and the like including the current time. The range displayed for a day, a week, or a month depends on the display setting (day, week, month) of the terminal device 101.

The schedule display updating unit 18 displays the time and date frame according to the current time and the schedule display setting (day, week, month), and displays the task according to the time and date (S34). The schedule display updating unit 18 displays the left side of the task execution screen in Fig. 18.

In addition, the task display updating unit 19 displays the task information currently scheduled to be executed based on the current time and schedule information (S35). The task currently scheduled to be executed is a most recent task relative to the current time. If the start time is not within a certain period of time, the task does not have to be displayed. The right side of the task execution screen illustrated in Fig. 18 is displayed. In this way, the task that is likely to be performed relative to the current time is displayed. This reduces the need for general users to select the task. To display task information may mean to display a task, or to display task components of the task.

The input acquiring unit 11 acquires information that the general user has entered the task start (S36).

The current time acquiring unit 21 acquires the current time (S37).

The task execution result registering unit 22 registers the current time as the task start time in the schedule information (S38).

The task display updating unit 19 changes the display of the started task component to a display of a currently executed task (S39). The display of a task component is a state of a button (button 653) which represents the implementation status of each task component, as described below. The implementation status of a task component is registered in the implementation status information illustrated in Fig. 9E. The display of the currently executed task indicates the display of any of the task component that currently is running.

The input acquiring unit 11 acquires information that the general user has changed the setting of the image forming device 103 based on the task component information registered in the task information or acquires information that the general user has inputted operation execution of the image forming device 103 (S40). The task components represent setting items and operation items corresponding to maintenance. Thus, the general user can set and operate a screen corresponding to maintenance without selecting or displaying a screen.

When the task component corresponding to the setting change of the image forming device 103 is executed (Yes of S41), the device setting acquiring-updating unit 24 updates the setting value of the image forming device 103 (S42).

Meanwhile, when the operation execution is performed instead of the task component corresponding to the setting change of the image forming device 103 (No in S41), the device operation unit 26 operates the image forming device 103 to perform a specified operation (S43).

Next, the input acquiring unit 11 acquires information that a general user has entered a completion check (S44). Completion check refers to completion of task components. The general user presses a button, for example. The operation reception unit 32 of the terminal device 101 receives the operation of a general user.

The process returns to step S40 until all task components registered to the task are completed (No in S45).

When all task components registered to the task are completed (Yes in S45), the current time acquiring unit 21 acquires the current time (S46).

The task execution result registering unit 22 registers the user information and the task end time (current time) of the completed task in the schedule information (S47).

The task display updating unit 19 updates the display of the completed task to the end task display (S48).

As described above, since the DFE 102 executes the setting change of the image forming device 103 as one of the tasks, the user does not need to search for the screen for the setting change.

### <Example of Screen>

Fig. 13 is a diagram illustrating an example of a task creation screen 600. Hereinafter, items of the task creation screen 600 will be described.
- Task name 601: A field in which the name of a task is entered, which can be set optionally by the administrator.
- Purpose-specific category 602: Tasks are grouped and displayed as a list of groups (categories) by a pull-down menu. For example, the purpose-specific category 602 may include a category for failure and a category for cleaning.
- Add to task: Items (task components) to be added to the task are items that are selected by the administrator.

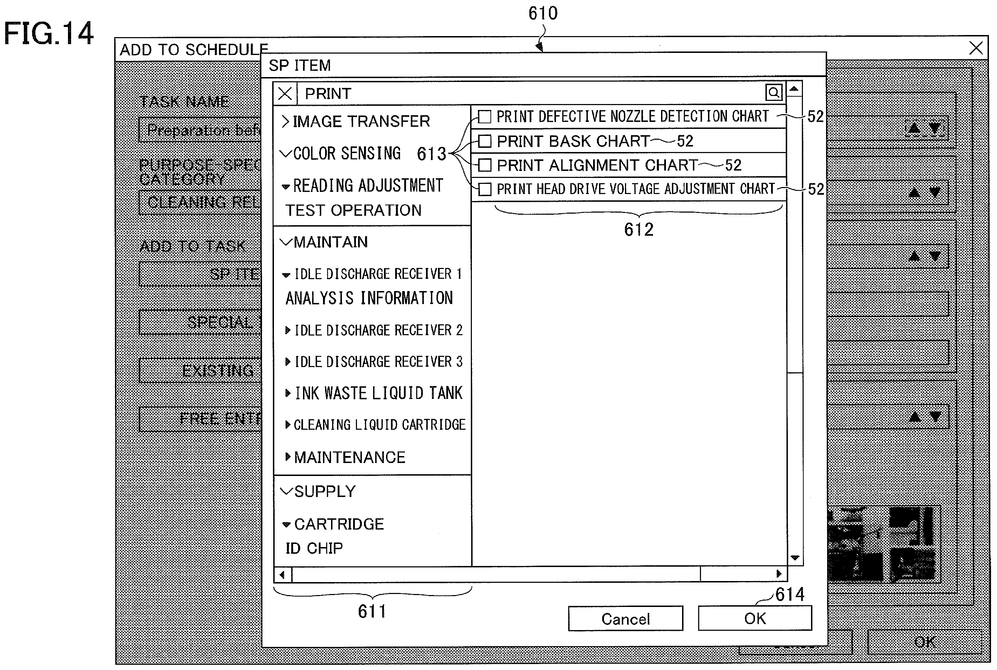

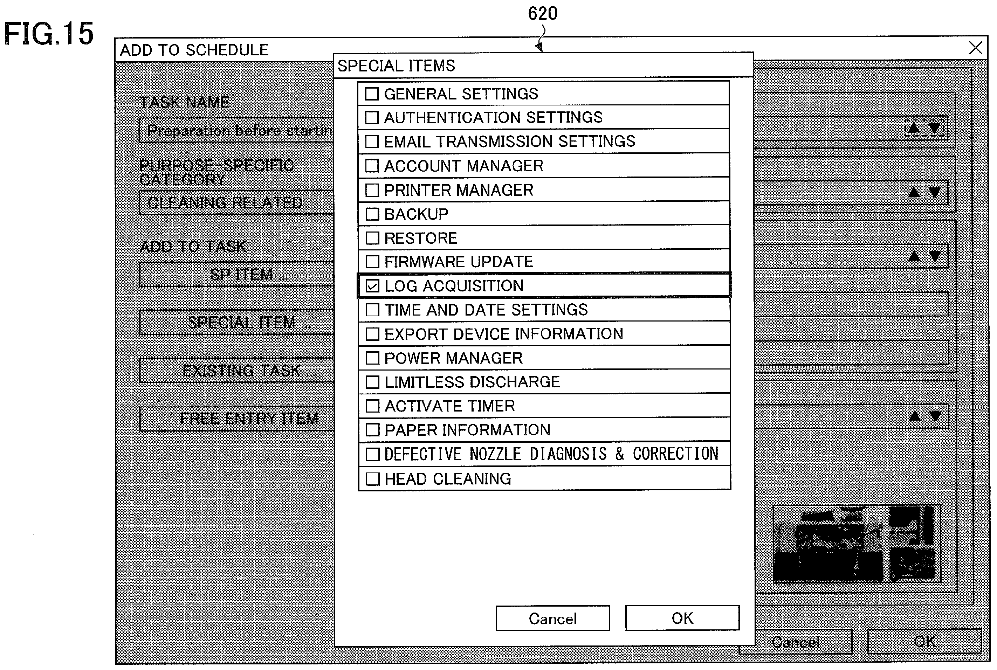

An SP item 603 displays a list of task components for maintenance previously performed by service engineers. Fig. 14 illustrates an example of the screen when the SP item is clicked. The special item 604 is not directly related to the image forming device 103 but displays a link to an item used as a task component. Examples include authentication, mail sending, and log acquisition (see Fig. 15). An existing task 605 is an item for the administrator to register a task already created as a task component. This means that a task is reusable. A free entry item 606 is a task component for the user to write precautions. This task component is not subject to implementation (i.e., used as a note) and is handled as a task component having already been executed before the task starts (or button representing implementation status (button 653) is not displayed).
- Task preview 607: A field for displaying contents of the task 51. In Fig. 13, one task 51 has four modules. Each of these modules represents a task component 52. Modules 1 and 2 are tasks of SP item 603. Module 3 is the existing task 605, and the existing task is registered as a task component. A more detailed task component operation (Tasks 001 and 002) was a task component of an existing task. Module 4 is a task component of the free entry item 606, and a general administrator can set up comments and images (e.g., a photograph of a part) relating to the work.

Each task component has an order change button 608. The administrator may press the order change button 608 to change the order of implementation of the task components 52.

When the administrator clicks an OK button 609, the task components 52 of the task preview 607 are registered in the task information.

Fig. 14 illustrates an example of the SP item screen 610 displayed when the SP item 603 is pressed. The SP item list 611 is displayed on the left side of the SP item screen 610. When the administrator selects one item of the SP item list 611, task components 612 corresponding to the selected item of the SP item list 611 is displayed on the right side. Each task component 612 is associated with a check box 613, allowing the administrator to check any of the check boxes 613. When the administrator clicks an OK button 614, the checked the task components are displayed in task preview 607 of Fig. 13.

Fig. 15 is a diagram illustrating an example of a special item list screen 620 displayed when a special item 604 is pressed. As illustrated in Fig. 15, there are general settings, authentication settings, email transmission settings, account manager, printer manager, backup, restore, firmware update, log acquisition, time and date settings, export device information, power manager, limitless discharge, activate timer, paper information, defective nozzle diagnosis and correction, and head cleaning. Each of these can be a task component.

Fig. 16 is a diagram illustrating an example of a task list screen 630. The task list screen 630 displays the task name for each category. These tasks are an administrator's registered tasks (some prearranged tasks). The administrator can select a desired task to be registered in the schedule. The administrator may select a desired task to display the schedule screen 640 based on the selection, or a user may display the task list screen 630 on the schedule screen 640 and select a desired task to be registered.

Fig. 17 is a diagram illustrating an example of a schedule screen 640. Hereinafter, the items of the schedule screen 640 will be described.
- Task name 641: A task name selected by the administrator on the task list screen 630 is displayed. The pull-down menu enables the administrator to select a task.
- Required time 642: Estimated task-required time registered in the task information is displayed. When a scheduled task implementation user scheduled to execute a task is set in a user field 646 and the mean required time of the task implemented by this scheduled task implementation user is registered in the mean required time information, the mean required time of the task implemented by the scheduled task implementation user is displayed.
- Scheduled implementation date 643: An item set by the administrator when the task execution date is set from a calendar etc.
- Start time 644: An item at which task execution is set by the administrator.
- Repeated period 645: An item set by the administrator when the task is executed repeatedly. Since there are many tasks to be executed repeatedly, such a setting can reduce the workload of the administrator.
- User field 646: A list of registered users displayed in a pull-down menu, and the like. The user name is displayed in a list form in association with the mean time required for the task, and the administrator can select a desired user from the list of registered users. The selected task implementation user is displayed.
- Schedule 647: A task registered in scheduled implementation date 643 and start time 644 is displayed. The scheduled task end time calculator 16 calculates a scheduled task end time from the required time 642 and the start time 644. The task display updating unit 19 displays one task in the schedule 647 in an interval from the start time 644 to the scheduled task end time according to the scheduled task end time.

When the administrator presses an OK button 648, the same schedule as in the schedule 647 is displayed and a newly registered task is displayed in this schedule 647. The scheduled implementation date 643 and start time 644 may be displayed in the schedule 647 in real time.

Fig. 18 is a diagram illustrating an example of a task execution screen 650. Hereinafter, items of the task execution screen 650 will be described.
- Schedule field 651: A task registered in the schedule information is displayed. General users can display the schedule of the task either monthly, weekly, or daily. The screen display unit 12 (schedule display updating unit 18) displays the task according to the display setting (month, week, and day) and the current time. For example, tasks are displayed on a monthly, weekly, or daily basis including the current time. In Fig. 18, a task is displayed on a daily basis. When the general users switch the display setting, the schedule display updating unit 18 acquires the task included in the display range in the display setting (day, week, month) from the schedule information, acquires the task information of this task, and updates the schedule display. The task displayed in the schedule field 651 is associated with the screen relating to execution of the task. An example of such a screen is a screen displayed in a task field 652.

- Task field 652: The most recent task relative to the current time is displayed. In Fig. 18, upon the task execution screen 650 being displayed, the task components of the most recent task are automatically displayed. Tasks before and after this most recent task are displayed in the order of implementation. In Fig. 18, there are tasks named "Web cleaner replacement", "Channel plate cleaning", and "Head cap cleaning", and of these, the content of "Head cap cleaning" (the most recent task) is displayed.

A task 59 ("Paper feeding belt cleaning") that has not been implemented so far is displayed at the top of the task execution screen 650.

The task field 652 may also display the one-day task selected in the schedule field 651.

Each task component has a button 653. When the administrator clicks the button 653, the status of the button 653 changes as follows (from the input to the task execution screen 650 according to the implementation status). For example, the implementation status may be changed from "execute" → "display currently executed task" → "display completed task". Note that upon the button 653 being pressed, individual task components or tasks may be completed. When the user presses the button 653 while the button 653 displays the execution (Execute), for example, a task detail screen as illustrated in Fig. 19 described later is displayed. Further, when inputting settings, execution, and the like on the detail screen and performing the completion operation and returning to Fig. 18, the status of the button 653 may change to "Complete". A task (task execution screen 650) may be created only with a task component that does not include a button 653.

Fig. 19 is a diagram illustrating an example of a task component related to a setting change. Fig. 19 illustrates an example of a task field 652 (a screen corresponding to a task component) of the task execution screen 650. In Fig. 19, general users can set a setting value into "Change value" of the item 654, and the terminal device 101 can transmit the setting value to the image forming device 103 through the DFE 102 by pressing the button 653. The device setting acquiring-updating unit 24 of the image forming device 103 stores the setting value in the device setting value information storage unit 27. The setting value can be changed from the task registered in the schedule in this manner. Fig. 19 may be a task detail screen displayed when the button 653 of Fig. 18 is pressed.

The task component can display a current setting value to "Current value" of the item 655, which is currently set to the image forming device 103.

The task components that do not change the setting values can be executed by a general user from the schedule. For example, in selecting the special item of "defective nozzle diagnosis and correction", an operating request for "defective nozzle diagnosis and correction" is transmitted to the image forming device 103 via the DFE 102 by pressing the execution button 653. The device operation unit 26 of the image forming device 103 performs test printing for detecting a defective nozzle, reads a print result with a scanner, and determines whether a defective nozzle is present. When a defective nozzle is present, correction processing such as cleaning the defective nozzle or excluding the defective nozzle from an ink-ejection operation target is performed. As described above, the image forming device 103 can be operated from the task registered in the schedule. In addition, the task field 652 of Fig. 18 or Fig. 19 may have buttons, check boxes, and the like as a means for inputting that the work of each task component or the entire task has been completed, or may have an additional field capable of inputting a message such as comments input by an operator or worker who carried out the task. An input that does not involve communication from the DFE 102 (information processing device) to the image forming device 103 (device), such as an input of completion or an input of text, may also be an example of an input related to a task.

### <Major Effects>

As described above, in the information processing system 100 according to the present embodiment, the administrator can register a task related to maintenance in a schedule. Further, since the information processing system 100 opens the necessary screen for the task registered at the current time, a general user can proceed with maintenance without searching for the screen relating to maintenance.

### <Other Applications>

While the preferred embodiments of the present invention have been described with reference to examples, various modifications and substitutions may be made thereto without departing from the spirit and scope of the invention.

For example, in this embodiment, the terminal device uses a general-purpose web browser, but an application dedicated for the DFE 102 may be used.

Further, each of the configuration examples of Figs. 6, 7, and 8 is divided according to the main functions in order to facilitate understanding of processing performed by the terminal device 101, the DFE 102, and the image forming device 103. The invention according to the present application is not limited by the method of dividing the processing units or by names. The processing of the terminal device 101, the DFE 102, and the image forming device 103 can be further divided into more processing units according to the processing contents. Alternatively, one processing unit can be split to include more processing.

Also, the devices described in the examples are merely indicative of one of a plurality of computing environments for carrying out the embodiments disclosed herein. In some embodiments, the DFE 102 includes a plurality of computing devices such as a server cluster. The plurality of computing devices is configured to communicate with each other via any type of communication link, including networks, shared memory, and the like, and perform the processes disclosed herein.

Furthermore, the DFE 102 can be configured to share various combinations of the disclosed processing steps, such as the flowcharts of FIGS. 10 to 12B. For example, a process performed by a predetermined unit may be performed by a plurality of information processing devices having the DFE 102. The DFE 102 may also be grouped into a single server device or divided into a plurality of devices.

The functions of the embodiments described above may be implemented by one or more processing circuits. As used herein, a "processing circuit" includes a processor programmed to perform each function by software, such as a processor implemented in electronic circuits, an ASIC (Application Specific Integrated Circuit) designed to perform each function as described above, a Digital Signal Processor (DSP), a Field Programmable Gate Array (FPGA), or a conventional circuit module.

The information processing system, the information processing device, the information processing method, the non-transitory computer-readable recording medium, the program, and the device are not limited to the specific embodiments described in the detailed description, and variations and modifications may be made without departing from the spirit and scope of the present invention.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the scope of the invention, which is defined by the appended claims.

## Claims

1. An information processing device (102) configured to receive registration of a task related to maintenance of a device (103), wherein the task comprises a plurality of task components, the task components being maintenance operations for accomplishing the task and representing setting items and operation items, the information processing device (102) comprising:
a storage unit (20) configured to store schedule information in which a task related to the maintenance is registered;
a screen display unit (12) configured to display the schedule information associated with a screen, the screen displaying the task components of the task; and
an input acquiring unit (11) configured to receive a user input related to a task component, representing a setting item, associated with the screen displayed by the screen display unit (12) to change a setting of the device (103).

2. The information processing device according to claim 1, further including
a communication unit (23) configured to transmit maintenance information to the device (103) according to the input acquired by the input acquiring unit (11).

3. The information processing device (102) according to claim 1 or 2, further comprising
a current time acquiring unit (21) configured to acquire a current time, wherein
the screen display unit (12) displays task information, based on a scheduled start time of the task and the current time registered in the schedule information.

4. The information processing device (102) according to any one of claims 1 to 3, wherein
the input acquiring unit (11) receives an input according to an implementation status of the task registered in the schedule information, and
the screen display unit (12) updates the implementation status of the task according to the received input of the implementation status of the task.

5. The information processing device (102) according to any one of claims 1 to 4, further comprising
a task execution result registering unit (22) configured to register information about a start time and an end time of the task and a task implementation user who has implemented the task in the schedule information.

6. The information processing device (102) according to claim 5, further comprising a scheduled task end time calculator (16) configured to calculate a scheduled task end time, wherein
the input acquiring unit (11) receives registration of information related to the task and a scheduled start time, with respect to the schedule information, the information related to the task including an estimated task-required time for estimating a time required for executing the task, and wherein
when the input acquiring unit (11) receives registration of a task with respect to the schedule information, the scheduled task end time calculator (16) calculates a scheduled task end time based on the estimated task-required time and the scheduled start time, and
the screen display unit (12) displays the calculated scheduled task end time on a schedule information creation screen (600).

7. The information processing device (102) according to claim 6, wherein
the screen display unit (12) displays a time required for a user who has implemented the task on the schedule information creation screen (600), the time required for the task being calculated based on the start time and the end time of the task, and wherein
when a different user is selected to implement a task, the scheduled task end time is updated with a time required for the different user to implement the task.

8. The information processing device (102) according claim to 6 or 7, further comprising
an information updating unit (13), wherein
the input acquiring unit (11) acquires a repeated period in which the task is executed repeatedly, and
the information updating unit (13) repeatedly registers the task in the schedule information according to the repeated period.

9. An information processing system (100) comprising:
the device (103) and
the information processing device (102) according to any preceding claim.

10. The information processing system (100) according to claim 9, wherein the information processing device further includes
a communication unit (23) configured to transmit maintenance information to the device (103) according to the input acquired by the input acquiring unit (11), wherein
the device (103) performs processing according to the maintenance information transmitted from the information processing device.

11. The information processing device (102) according to any of claims 6 to 8, wherein
the storage unit (20) stores a time required for each of the task components implemented in the task, and
the scheduled task end time calculator (16) calculates the estimated task-required time by summing the times required for the task components of the task.

12. The information processing system (100) according to claim 10, wherein
when the task is a task to change a setting value of the device (103), the communication unit (23) of the information processing device (102) transmits a setting value to the device (103) as maintenance information, wherein
the device (103) includes
a device setting value information storage unit (27) configured to store the setting value of the device (103), and
a device setting acquiring-updating unit (24) configured to update the setting value stored in the device setting value information storage unit (27) with the setting value transmitted from the information processing device (102).

13. The information processing system (100) according to claim 10, wherein
when the task is a task configured to operate the device, the communication unit (23) of the information processing device (102) transmits an operating request to the device (103) as maintenance information, and wherein
the device (103) further includes
a device operation unit (26) configured to operate the device (103) in response to the operating request transmitted from the information processing device (102).

14. An information processing method performed by an information processing system, the information processing system (100) including a device (103) and an information processing device (102), the information processing device (102) being configured to receive registration of a task related to maintenance of the device (103), wherein the task comprises a plurality of task components, the task components being maintenance operations for accomplishing the task and representing setting items and operation items, the information processing method comprising:
storing schedule information in which a task related to the maintenance is registered;
displaying the schedule information associated with a screen, the screen relating to execution of the task; and
receiving a user input related to the task component, representing a setting item, associated with the screen to change a setting of the device (103).

15. A program comprising instructions which, when the program is executed by a computer, cause the computer to carry out the method according to claim 14

## Patentansprüche

1. Informationsverarbeitungsvorrichtung (102), konfiguriert zum Empfangen einer Registrierung einer Aufgabe bezüglich der Wartung einer Vorrichtung (103), wobei die Aufgabe eine Vielzahl von Aufgabenkomponenten umfasst, die Aufgabenkomponenten Wartungsvorgänge zum Durchfahren der Aufgabe sind und Einstellungselemente und Betriebselemente repräsentieren, die Informationsverarbeitungsvorrichtung (102) umfassend:
eine Speichereinheit (20), konfiguriert zum Speichern von Zeitplaninformationen, in denen eine Aufgabe bezüglich der Wartung registriert ist;
eine Bildschirmanzeigeeinheit (12), konfiguriert zum Anzeigen der mit einem Bildschirm assoziierten Zeitplaninformationen, wobei der Bildschirm die Aufgabenkomponenten der Aufgabe anzeigt; und
eine Eingabeerfassungseinheit (11), konfiguriert zum Empfangen einer Benutzereingabe bezüglich einer Aufgabenkomponente, die ein Einstellungselement repräsentiert, das mit dem durch die Bildschirmanzeigeeinheit (12) angezeigten Bildschirm assoziiert ist, um eine Einstellung der Vorrichtung (103) zu ändern.

2. Informationsverarbeitungsvorrichtung nach Anspruch 1, ferner einschließend
eine Kommunikationseinheit (23), konfiguriert zum Übertragen von Wartungsinformationen an die Vorrichtung (103) gemäß der durch die Eingabeerfassungseinheit (11) erfassten Eingabe.

3. Informationsverarbeitungsvorrichtung (102) nach Anspruch 1 oder 2, ferner umfassend
eine Einheit zum Erfassen der gegenwärtigen Zeit (21), konfiguriert zum Erfassen einer gegenwärtigen Zeit, wobei
die Bildschirmanzeigeeinheit (12) Aufgabeinformationen basierend auf einer geplanten Anfangszeit der Aufgabe und der in den Zeitplaninformationen registrierten gegenwärtigen Zeit anzeigt.

4. Informationsverarbeitungsvorrichtung (102) nach einem der Ansprüche 1 bis 3, wobei
die Eingabeerfassungseinheit (11) eine Eingabe gemäß einem in den Zeitplaninformationen registrierten Implementierungsstatus der Aufgabe empfängt und
die Bildschirmanzeigeeinheit (12) den Implementierungsstatus der Aufgabe gemäß der empfangenen Eingabe des Implementierungsstatus der Aufgabe aktualisiert.

5. Informationsverarbeitungsvorrichtung (102) nach einem der Ansprüche 1 bis 4, ferner umfassend
eine Aufgabenausführungsergebnis-Registrierungseinheit (22), konfiguriert zum Registrieren von Informationen über eine Anfangszeit und eine Endzeit der Aufgabe und einen Aufgabeimplementierungsbenutzer, der die Aufgabe in den Zeitplaninformationen implementiert hat.

6. Informationsverarbeitungsvorrichtung (102) nach Anspruch 5, ferner umfassend einen Rechner für die Endzeit der geplanten Aufgabe (16), konfiguriert zum Berechnen einer Endzeit der geplanten Aufgabe, wobei
die Eingabeerfassungseinheit (11) eine Registrierung von Informationen bezüglich der Aufgabe und eine geplante Anfangszeit in Bezug auf die Zeitplaninformationen empfängt, wobei die Informationen bezüglich der Aufgabe eine geschätzte Zeit, die für die Aufgabe benötigt wird, zum Schätzen einer zur Ausführung der Aufgabe benötigten Zeit einschließen und wobei,
wenn die Eingabeerfassungseinheit (11) eine Registrierung einer Aufgabe in Bezug auf die Zeitplaninformationen empfängt, der Rechner für die Endzeit der geplanten Aufgabe (16) eine geplante Aufgabenendzeit basierend auf der geschätzten Zeit, die für die Aufgabe benötigt wird, und der geplanten Anfangszeit berechnet, und
die Bildschirmanzeigeeinheit (12) die berechnete Endzeit der geplanten Aufgabe auf einem Zeitplaninformationen-Erstellungsbildschirm (600) anzeigt.

7. Informationsverarbeitungsvorrichtung (102) nach Anspruch 6, wobei
die Bildschirmanzeigeeinheit (12) eine benötigte Zeit für einen Benutzer, der die Aufgabe implementiert hat, auf dem Zeitplaninformationen-Erstellungsbildschirm (600) anzeigt, wobei die benötigte Zeit für die Aufgabe basierend auf der Anfangszeit und der Endzeit der Aufgabe berechnet wird und wobei,
wenn ein anderer Benutzer zum Implementieren einer Aufgabe ausgewählt wird, die geplante Aufgabenendzeit mit einer benötigten Zeit für den anderen Benutzer zum Implementieren der Aufgabe aktualisiert wird.

8. Informationsverarbeitungsvorrichtung (102) nach Anspruch 6 oder 7, ferner umfassend
eine Informationsaktualisierungseinheit (13), wobei
die Eingabeerfassungseinheit (11) eine wiederholte Periode, in der die Aufgabe wiederholt ausgeführt wird, erfasst und
die Informationsaktualisierungseinheit (13) die Aufgabe in den Zeitplaninformationen gemäß der wiederholten Periode wiederholt registriert.

9. Informationsverarbeitungssystem (100), umfassend:
die Vorrichtung (103) und
die Informationsverarbeitungsvorrichtung (102) gemäß einem der vorhergehenden Ansprüche.

10. Informationsverarbeitungssystem (100) nach Anspruch 9, wobei die Informationsverarbeitungsvorrichtung ferner einschließt
eine Kommunikationseinheit (23), konfiguriert zum Übertragen von Wartungsinformationen an die Vorrichtung (103) gemäß der durch die Eingabeerfassungseinheit (11) erfassten Eingabe, wobei
die Vorrichtung (103) eine Verarbeitung gemäß den von der Informationsverarbeitungsvorrichtung übertragenen Wartungsinformationen durchführt.

11. Informationsverarbeitungsvorrichtung (102) nach einem der Ansprüche 6 bis 8, wobei
die Speichereinheit (20) eine benötigte Zeit für jede der in der Aufgabe implementierten Aufgabenkomponenten speichert und
der Rechner für die Endzeit der geplanten Aufgabe (16) die geschätzte Zeit, die für die Aufgabe benötigt wird, durch Summieren der für die Aufgabenkomponenten der Aufgabe benötigten Zeiten berechnet.

12. Informationsverarbeitungssystem (100) nach Anspruch 10, wobei
wenn die Aufgabe eine Aufgabe zum Ändern eines Einstellungswerts der Vorrichtung (103) ist, die Kommunikationseinheit (23) der Informationsverarbeitungsvorrichtung (102) einen Einstellungswert an die Vorrichtung (103) als Wartungsinformationen überträgt, wobei
die Vorrichtung (103) einschließt
eine Vorrichtung-Einstellungswertinformationen-Speichereinheit (27), konfiguriert zum Speichern des Einstellungswerts der Vorrichtung (103), und
eine Vorrichtung-Einstellungserfassung-Aktualisierungseinheit (24), konfiguriert zum Aktualisieren des in der Vorrichtung-Einstellungswertinformationen-Speichereinheit (27) gespeicherten Einstellungswerts mit dem von der Informationsverarbeitungsvorrichtung (102) übertragenen Einstellungswert.

13. Informationsverarbeitungssystem (100) nach Anspruch 10, wobei,
wenn die Aufgabe eine Aufgabe ist, die zum Betreiben der Vorrichtung konfiguriert ist, die Kommunikationseinheit (23) der Informationsverarbeitungsvorrichtung (102) eine Betriebsanforderung an die Vorrichtung (103) als Wartungsinformationen überträgt, und wobei
die Vorrichtung (103) ferner einschließt
eine Vorrichtungsbetriebseinheit (26), konfiguriert zum Betreiben der Vorrichtung (103) als Reaktion auf die von der Informationsverarbeitungsvorrichtung (102) übertragenen Betriebsanforderung.

14. Informationsverarbeitungsverfahren, durchgeführt durch ein Informationsverarbeitungssystem, wobei das Informationsverarbeitungssystem (100) eine Vorrichtung (103) und eine Informationsverarbeitungsvorrichtung (102) einschließt, wobei die Informationsverarbeitungsvorrichtung (102) konfiguriert ist zum Empfangen einer Registrierung einer Aufgabe bezüglich einer Wartung der Vorrichtung (103), wobei die Aufgabe eine Vielzahl von Aufgabenkomponenten umfasst, die Aufgabenkomponenten Wartungsvorgänge zum Durchfahren der Aufgabe sind und Einstellungselemente und Betriebselemente repräsentieren, das Informationsverarbeitungsverfahren umfassend:
Speichern von Zeitplaninformationen, in denen eine Aufgabe bezüglich der Wartung registriert ist;
Anzeigen der mit einem Bildschirm assoziierten Zeitplaninformationen, wobei der Bildschirm zur Ausführung der Aufgabe in Beziehung steht; und
Empfangen einer Benutzereingabe bezüglich der Aufgabenkomponente, die ein Einstellungselement repräsentiert, das mit dem Bildschirm assoziiert ist, um eine Einstellung der Vorrichtung (103) zu ändern.

15. Programm, umfassend Anweisungen, die, wenn das Programm durch einen Computer ausgeführt wird, den Computer veranlassen, das Verfahren nach Anspruch 14 auszuführen.

## Revendications

1. Dispositif de traitement d'information (102) configuré pour recevoir l'enregistrement d'une tâche se rapportant à la maintenance d'un dispositif (103), dans lequel la tâche comprend une pluralité de composants de tâche, les composants de tâche étant des opérations de maintenance pour réaliser la tâche et représentant des éléments de réglage et des éléments d'opération, le dispositif de traitement d'information (102) comprenant :
une unité de stockage (20) configurée pour stocker une information de planification où une tâche se rapportant à la maintenance est enregistrée ;
une unité d'affichage d'écran (12) configurée pour afficher l'information de planification associée à un écran, l'écran affichant les composants de tâche de la tâche ; et
une unité d'acquisition d'entrée (11) configurée pour recevoir une entrée d'utilisateur se rapportant à un composant de tâche, représentant un élément de réglage, associé à l'écran affiché par l'unité d'affichage d'écran (12) pour modifier un réglage du dispositif (103).

2. Dispositif de traitement d'information selon la revendication 1, incluant en outre :
une unité de communication (23) configurée pour transmettre l'information de maintenance au dispositif (103) conformément à l'entrée acquise par l'unité d'acquisition d'entrée (11).

3. Dispositif de traitement d'information (102) selon la revendication 1 ou 2, comprenant en outre :
une unité d'acquisition de temps courant (21) configurée pour acquérir un temps courant, dans lequel
l'unité d'affichage d'écran (12) affiche l'information de tâche, sur la base d'un temps de début planifié de la tâche et du temps courant enregistrés dans l'information de planification.

4. Dispositif de traitement d'information (102) selon l'une quelconque des revendications 1 à 3, dans lequel :
l'unité d'acquisition d'entrée (11) reçoit une entrée conformément à un état de mise en œuvre de la tâche enregistrée dans l'information de planification ; et
l'unité d'affichage d'écran (12) met à jour l'état de mise en œuvre de la tâche conformément à l'entrée reçue de l'état de mise en œuvre de la tâche.

5. Dispositif de traitement d'information (102) selon l'une quelconque des revendications 1 à 4, comprenant en outre :
une unité d'enregistrement de résultat d'exécution de tâche (22) configurée pour enregistrer une information concernant un temps de début et un temps de fin de la tâche et un utilisateur de mise en œuvre de tâche qui a mis en œuvre la tâche dans l'information de planification.

6. Dispositif de traitement d'information (102) selon la revendication 5, comprenant en outre un calculateur de temps de fin de tâche planifié (16) configuré pour calculer un temps de fin de tâche planifié, dans lequel :
l'unité d'acquisition d'entrée (11) reçoit l'enregistrement de l'information se rapportant à la tâche et un temps de début planifié, en relation avec l'information de planification, l'information se rapportant à la tâche incluant un temps requis de tâche estimé pour estimer un temps requis pour exécuter la tâche, et dans lequel
lorsque l'unité d'acquisition d'entrée (11) reçoit l'enregistrement d'une tâche en relation avec l'information de planification, le calculateur de temps de fin de tâche planifié (16) calcule un temps de fin de tâche planifié sur la base du temps requis de tâche estimé et du temps de début planifié, et
l'unité d'affichage d'écran (12) affiche le temps de fin de tâche planifié calculé sur un écran de création d'information de planification (600).

7. Dispositif de traitement d'information (102) selon la revendication 6, dans lequel :
l'unité d'affichage d'écran (12) affiche un temps requis pour un utilisateur qui a mis en œuvre la tâche sur l'écran de création d'information de planification (600), le temps requis pour la tâche étant calculé sur la base du temps de début et du temps de fin de la tâche, et dans lequel
lorsqu'un utilisateur différent est sélectionné pour mettre en œuvre une tâche, le temps de fin de tâche planifié est mis à jour avec un temps requis pour que l'utilisateur différent mette en œuvre la tâche.

8. Dispositif de traitement d'information (102) selon la revendication 6 ou 7, comprenant en outre :
une unité de mise à jour d'information (13), dans lequel
l'unité d'acquisition d'entrée (11) acquiert une période répétée dans laquelle la tâche est exécutée de façon répétée, et
l'unité de mise à jour d'information (13) enregistre de façon répétée la tâche dans l'information de planification conformément à la période répétée.

9. Système de traitement d'information (100) comprenant :
le dispositif (103) et
le dispositif de traitement d'information (102) selon l'une quelconque des revendications précédentes.

10. Système de traitement d'information (100) selon la revendication 9, dans lequel le dispositif de traitement d'information inclut en outre :
une unité de communication (23) configurée pour transmettre une information de maintenance au dispositif (103) conformément à l'entrée acquise par l'unité d'acquisition d'entrée (11), dans lequel
le dispositif (103) réalise le traitement conformément à l'information de maintenance transmise depuis le dispositif de traitement d'information.

11. Dispositif de traitement d'information (102) selon l'une quelconque des revendications 6 à 8, dans lequel :
l'unité de stockage (20) stocke un temps requis pour chacun des composants de tâche mis en œuvre dans la tâche, et
le calculateur de temps de fin de tâche planifié (16) calcule le temps requis de tâche estimé en sommant les temps requis pour les composants de tâche de la tâche.

12. Système de traitement d'information (100) selon la revendication 10, dans lequel :
lorsque la tâche est une tâche pour modifier une valeur de réglage du dispositif (103), l'unité de communication (23) du dispositif de traitement d'information (102) transmet une valeur de réglage au dispositif (103) en tant qu'information de maintenance, dans lequel
le dispositif (103) inclut :
une unité de stockage d'information de valeur de réglage de dispositif (27) configurée pour stocker la valeur de réglage du dispositif (103), et
une unité d'acquisition-de mise à jour de réglage de dispositif (24) configurée pour mettre à jour la valeur de réglage stockée dans l'unité de stockage d'information de valeur de réglage de dispositif (27) avec la valeur de réglage transmise depuis le dispositif de traitement d'information (102).

13. Système de traitement d'information (100) selon la revendication 10, dans lequel
lorsque la tâche est une tâche configurée pour faire fonctionner le dispositif, l'unité de communication (23) du dispositif de traitement d'information (102) transmet une requête de fonctionnement au dispositif (103) en tant qu'information de maintenance, et dans lequel
le dispositif (103) inclut en outre
une unité de fonctionnement de dispositif (26) configurée pour faire fonctionner le dispositif (103) en réponse à la requête de fonctionnement transmise depuis le dispositif de traitement d'information (102).

14. Procédé de traitement d'information réalisé par un système de traitement d'information, le système de traitement d'information (100) incluant un dispositif (103) et un dispositif de traitement d'information (102), le dispositif de traitement d'information (102) étant configuré pour recevoir l'enregistrement d'une tâche se rapportant à la maintenance du dispositif (103), dans lequel la tâche comprend une pluralité de composants de tâche, les composants de tâche étant des opérations de maintenance pour réaliser la tâche et représentant des éléments de réglage et des éléments d'opération, le procédé de traitement d'information comprenant :
le stockage d'une information de planification où une tâche se rapportant à la maintenance est enregistrée ;
l'affichage de l'information de planification associée à un écran, l'écran se rapportant à **l'exécution** de la tâche ; et
la réception d'une entrée d'utilisateur se rapportant au composant de tâche, représentant un élément de réglage, associé à **l'écran** pour modifier un réglage du dispositif (103).

15. Programme comprenant des instructions qui, lorsque le programme est exécuté par un ordinateur, amènent l'ordinateur à mettre en œuvre le procédé selon la revendication 14.
